# EUROPEAN PATENT APPLICATION

(11) **EP 4 538 618 A1**
(43) Date of publication of application: **16.04.2025**
(21) Application number: 23941692.8
(22) Date of filing: 13.06.2023
(51) Int. Cl.: F25D 23/06, F25D 23/02, F16L 59/065

(54) **VACUUM ADIABATIC BODY**

(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); KIM, Bongjin, Seoul 08592 (KR); LEE, Sungsub, Seoul 08592 (KR)
(74) Representative: Ter Meer Steinmeister & Partner
(86) International application number: PCT/KR2023/008139
(87) International publication number: WO 2024/257908

(57) **Abstract**

A vacuum adiabatic body of the present invention includes: a first plate having a first temperature; a second plate having a second temperature different from the first temperature; and a sealing part configured to seal the first plate and the second plate, thereby providing a vacuum space.

## Description

### TECHNICAL FIELD

The present invention relates to a vacuum adiabatic body.

### BACKGROUND ART

Adiabatic performance may be improved by forming an adiabatic wall using vacuum. A device of which at least a portion of an internal space is provided in a vacuum state to achieve an adiabatic effect may be called a vacuum adiabatic body.

The applicant has developed a technology to obtain a vacuum adiabatic body that may be used in various devices and home appliances, and has disclosed a vacuum adiabatic body and a refrigerator in Korean Patent Publication No. 1020200001396A. The vacuum adiabatic body of the cited document discloses a structure in which a heat exchanger is installed inside a vacuum space.

The cited document proposes a self-configuration and support structure in which the heat exchanger is placed in the vacuum space. The cited document does not disclose a specific installation structure of the heat exchanger and its relationship with other members. For example, it does not disclose the relationship between the heat exchanger and other members inside the vacuum space, or a method of mounting the heat exchanger.

### DISCLOSURE OF THE INVENTION

### TECHNICAL PROBLEM

The present invention proposes an installation structure of a heat exchanger without a loss of adiabatic efficiency.

In addition to the examples proposed above, the present invention proposes specific solutions to problems and solutions for solving the problems in [Technical Solution] and [Best Mode].

### TECHNICAL SOLUTION

The vacuum adiabatic body of the present invention may include: a first plate having a first temperature; a second plate having a second temperature that differs from the first temperature; and a vacuum space provided between the first and second plates. The vacuum adiabatic body of the present invention may include a sealing part that seals the first plate and the second plate to provide the vacuum space. The vacuum adiabatic body of the present invention may include a support configured to support the vacuum space.

Optionally, the support may be provided with a single type of units that are coupled vertically. In the unit, supporting bodies may be provided to be spaced a predetermined interval from each other. The upper unit may be coupled in symmetrical alignment with respect to the lower unit without relative movement. The upper unit may be coupled by moving by one time, or 2n (n is a natural number) or (2n+1) (n is a natural number) times the interval in at least one direction of the X-axis of the extension direction of the vacuum space and the Y-axis of the vacuum space, relative to the lower unit. The upper unit may be coupled by moving by one time or (2n+1) (n is a natural number) times the interval along two axes of the X-axis of the extension direction of the vacuum space and the Y-axis of the vacuum space, relative to the lower unit. The upper unit may be coupled by moving by 2n (n is a natural number) times the interval along either the X-axis of the extension direction of the vacuum space or the Y-axis of the vacuum space, relative to the lower unit. The upper unit may be coupled by moving by one time or (2n+1) (n is a natural number) times the interval in one direction along the X-axis of the extension direction of the vacuum space and the Y-axis of the vacuum space, relative to the lower unit. The upper unit may be coupled by moving by (2n+1) (n is a natural number) times the interval in the X-axis of the extension direction of the vacuum space and by 2n (n is a natural number) times the interval in the Y-axis of the vacuum space, relative to the lower unit. The units may be coupled by crossing each other at 2n times the interval. Either the upper unit or the lower unit may have an empty area in which a corresponding grid of the other facing unit is empty. The empty area may be one grid or two grids. The upper unit at the upper side and the lower unit at the lower side may be aligned symmetrically to each other. The upper unit at the upper side and the lower unit at the lower side may be coupled to each other by crossing each other. At least one of the at least two upper units or the at least two lower units may be configured to be directly connected to each other. The upper unit at the upper side and the lower unit at the lower side may be coupled to intersect each other in at least one direction of the X-axis of the extension direction of the vacuum space and the Y-axis of the vacuum space.

Optionally, at least a portion of the support may be provided by repeatedly coupling the same unit. The unit may be provided by alternately arranging a first supporting body and a fourth supporting body coupled to the first supporting body. The unit may have two axes in the extension direction of the vacuum space. The first Y-axis edge of the unit may be provided with a first supporting body and a fourth supporting body at each end portion. The second Y-axis edge of the unit may be provided with a fourth supporting body and a first supporting body at each end portion. The first X-axis edge of the unit may be provided with a first supporting body and a fourth supporting body at each end portion. The second X-axis edge of the unit may be provided with a fourth supporting body and a first supporting body at each end portion. The first Y-axis edge of the unit may be provided with a fourth supporting body, and the fourth supporting body may be provided at each end portion. The second Y-axis edge of the unit may be provided with a first supporting body and a first supporting body at each end portion. The first X-axis edge of the unit may be provided with a fourth supporting body and a first supporting body at each end portion. The second X-axis edge of the unit may be provided with a first supporting body and a fourth supporting body at each end portion. The first Y-axis edge of the unit may be provided with a fourth supporting body and a fourth supporting body at each end portion. The second Y-axis edge of the unit may be provided with a first supporting body and a first supporting body at each end portion. The first X-axis edge of the unit may be provided with a fourth supporting body and a fourth supporting body at each end portion. The second X-axis edge of the unit may be provided with a first supporting body and a first supporting body at each end portion. The unit may be provided with a first supporting body and a fourth supporting body coupled to the first supporting body. The unit may be provided with a first area on which the first supporting bodies are gathered. The unit may be provided with a first supporting body body and a fourth supporting body body coupled to the first supporting body body, and the unit may be provided with a second area on which the fourth supporting bodies are gathered. A boundary area between the first area and the second area may be provided. The first supporting body may be a bar. The fourth supporting body may be a groove. The first supporting body and the fourth supporting body may extend in a thickness direction of the vacuum space. In the support, the units may be aligned symmetrically vertically. In the support, the units may be misaligned vertically. A second supporting body and a third supporting body coupled to the second supporting body may be alternately provided on the edge of the unit. The second supporting body and the third supporting body may be provided on edges facing each other.

Optionally, the support may be coupled to an upper unit and a lower unit, and a plurality of injection gates may be provided in the upper unit and the lower unit. At least one of the upper unit and the lower unit may include an area on which the injection gate has a short interval and an area on which the injection gate has a long interval. The upper unit and the lower unit may overlap each other. The upper unit and the lower unit may not overlap each other.

Optionally, a support configured to support the vacuum space and to which a single type of unit is coupled vertically may be provided. The unit may be provided with a first supporting body and a fourth supporting body having a structure into which the first supporting body is fitted at a predetermined interval. The first supporting body and the fourth supporting body may be alternately disposed along the first axis of the unit. The first supporting body and the fourth supporting body may be continuous along the second axis of the unit. The units may be coupled to face each other vertically. The same support may be placed on both end portions of the first axis. Different supports may be placed at both end portions of the above first axis, respectively. A second supporting body and a third supporting body may be provided on the edge of the unit. Either the upper unit or the lower unit may have an empty area in which a corresponding grid of the other facing unit is empty. The empty area may be one grid or two grids. The upper unit at the upper side and the lower unit at the lower side may be misaligned with each other. The upper unit at the upper side and the lower unit at the lower side may be aligned symmetrically to each other. At least one of at least two upper units and at least two units may be configured to be directly connected to each other. The upper unit at the upper side and the lower unit at the lower side may be coupled to intersect each other in at least one direction of the X-axis of the extension direction of the vacuum space and the Y-axis of the vacuum space.

Optionally, at least a portion of the support may be provided by repeatedly coupling the same unit. The same support may be continuous along any axis of the unit. The unit may be provided alternately with a first supporting body and a fourth supporting body coupled to the first supporting body. The vacuum space may have two axes in the extension direction. The first Y-axis edge of the unit may be provided as an end portion of each of the fourth supporting body, and the first supporting body and the first supporting body and the fourth supporting body may be provided alternately. The second Y-axis edge of the unit may be provided as an end portion of each of the first supporting body body and the fourth supporting body body, and the first supporting body body and the fourth supporting body body may be provided alternately. The fourth supporting body may be continuously provided on the first X-axis edge of the unit. The first supporting body may be continuously provided on the second X-axis edge of the unit. The first Y-axis edge of the unit may be provided as an end portion of the fourth supporting body and the fourth supporting body, and the first supporting body and the fourth supporting body may be provided alternately. The second Y-axis edge of the unit may be provided as an end portion of each of the fourth supporting body and the fourth supporting body, and the first supporting body and the fourth supporting body may be provided alternately. The first supporting body may be continuously provided on the first X-axis edge of the unit. The first supporting body may be continuously provided on the second X-axis edge of the unit. One of the upper unit at the upper side and the lower unit at the lower side may be coupled by moving by (1+2n) (where n is 0 or a natural number) pitches along the first axis along which the first and second supporting bodies are alternately disposed, relative to the other. One of the upper unit at the upper side and the lower unit at the lower side may be coupled by moving by n (where n is a natural number) pitches along the first axis along which the first and second supporting bodies are not alternately disposed, relative to the other. The support may provide a large empty area on which two or more grids are empty.

Optionally, the unit may be provided with at least two supports and may have a first area having a high density of the first supporting body of the at least two units, and a second area having a high density of the second supporting body of the at least two units. The density of the injection gate of the first area and the injection gate of the second area may be different from each other. A single boundary area may be included between the first area and the second area.

### ADVANTAGEOUS EFFECTS

According to the present invention, the vacuum adiabatic body having the high adiabatic efficiency may be proposed.

According to the present invention, the vacuum adiabatic body may be conveniently manufactured.

The effects of the present invention are disclosed in more detail in [Specific details for carrying out the invention].

### BRIEF DESCRIPTION OF THE DRAWINGS

Fig. 1 is a perspective view of a refrigerator according to an embodiment.
Fig. 2 is a view schematically illustrating a vacuum adiabatic body used in a main body and a door of the refrigerator.
Fig. 3 is a view illustrating an example of a support that maintains a vacuum space.
Fig. 4 is a view for explaining an example of the vacuum with respect to a heat transfer resistor.
Fig. 5 is a graph illustrating results obtained by observing a process of exhausting the inside of the vacuum adiabatic body with a time and pressure when the support is used.
Fig. 6 is a graph illustrating results obtained by comparing a vacuum pressure to gas conductivity.
Fig. 7 is a view for explaining a method for manufacturing a vacuum adiabatic body.
FIG. 8 is a view illustrating an example in which a support and a heat exchanger are installed.
FIG. 9 is a view illustrating an example of a unit of the support and coupling of the unit.
FIG. 10 is a view illustrating an example of the unit of the support and the coupling of the unit.
FIGS. 11 to 21 are views of a support according to an embodiment.
FIG. 22 is a view illustrating the unit of the support according to an embodiment.
FIG. 23 is a view of the support according to an embodiment.
FIG. 24 is an enlarged view of a portion A of FIG. 23.
FIG. 25 is a view for explaining one-axis male-female alternating one-axis symmetrical unit.
FIG. 26 is a view illustrating a coupling structure of the unit according to an embodiment.
FIG. 27(a) is a view illustrating another example of the unit according to an embodiment.
FIG. 27(b) is a cross-sectional view taken along line 1-1' of FIG. 27(a).
FIG. 28 is a view of a unit and a support according to an embodiment.
FIG. 29 is a plan view of one-axis male-female group alternating unit.

### MODE FOR CARRYING OUT THE INVENTION

Hereinafter, specific embodiments will be described in detail with reference to the accompanying drawings. The invention may, however, be embodied in many different forms and should not be construed as being limited to the embodiments set forth herein, and a person of ordinary skill in the art, who understands the spirit of the present invention, may readily implement other embodiments included within the scope of the same concept by adding, changing, deleting, and adding components; rather, it will be understood that they are also included within the scope of the present invention.

The present invention may have many embodiments in which the idea is implemented, and in each embodiment, any portion may be replaced with a corresponding portion or a portion having a related action according to another embodiment. The present invention may be any one of the examples presented below or a combination of two or more examples.

The present disclosure may be a vacuum adiabatic body including a first plate; a second plate; and a vacuum space provided between the first and second plates. The vacuum adiabatic body may include a sealing part for providing the vacuum state space (vacuum space). The vacuum space may be a space in a vacuum state provided in an internal space between the first plate and the second plate. The seal may seal the first plate and the second plate to provide the internal space provided in the vacuum state. The vacuum adiabatic body may optionally include a side plate connecting the first plate to the second plate. In the present disclosure, the expression "plate" may mean at least one of the first and second plates or the side plate. At least a portion of the first and second plates and the side plate may be integrally provided, or at least portions may be sealed to each other. Optionally, the vacuum adiabatic body may include a support that maintains the vacuum space. The vacuum adiabatic body may selectively include a thermal insulator that reduces an amount of heat transfer between a first space provided in vicinity of the first plate and a second space provided in vicinity of the second plate or reduces an amount of heat transfer between the first plate and the second plate.

Optionally, the vacuum adiabatic body may include a component coupling portion provided on at least a portion of the plate. Optionally, the vacuum adiabatic body may include another adiabatic body. Another adiabatic body may be provided to be connected to the vacuum adiabatic body. Another adiabatic body may be an adiabatic body having a degree of vacuum, which is equal to or different from a degree of vacuum of the vacuum adiabatic body. Another adiabatic body may be an adiabatic body that does not include a degree of vacuum less than that of the vacuum adiabatic body or a portion that is in a vacuum state therein. In this case, it may be advantageous to connect another object to another adiabatic body.

In the present disclosure, a direction along a wall defining the vacuum space may include a longitudinal direction of the vacuum space and a height direction of the vacuum space. The height direction of the vacuum space may be defined as any one direction among virtual lines connecting the first space to the second space to be described later while passing through the vacuum space. The longitudinal direction of the vacuum space may be defined as a direction perpendicular to the set height direction of the vacuum space.

In the present disclosure, that an object A is connected to an object B means that at least a portion of the object A and at least a portion of the object B are directly connected to each other, or that at least a portion of the object A and at least a portion of the object B are connected to each other through an intermedium interposed between the objects A and B. The intermedium may be provided on at least one of the object A or the object B. The connection may include that the object A is connected to the intermedium, and the intermedium is connected to the object B.

A portion of the intermedium may include a portion connected to either one of the object A and the object B. The other portion of the intermedium may include a portion connected to the other of the object A and the object B. As a modified example, the connection of the object A to the object B may include that the object A and the object B are integrally prepared in a shape connected in the above-described manner. In the present disclosure, an embodiment of the connection may be support, combine, or a seal, which will be described later.

In the present disclosure, that the object A is supported by the object B means that the object A is restricted in movement by the object B in one or more of the +X, -X, +Y, -Y, +Z, and - Z axis directions. In the present invention, an embodiment of the support may be the combine or seal, which will be described later. In the present invention, that the object A is combined with the object B may define that the object A is restricted in movement by the object B in one or more of the X, Y, and Z-axis directions.

In the present disclosure, an embodiment of the combining may be the sealing to be described later. In the present disclosure, that the object A is sealed to the object B may define a state in which movement of a fluid is not allowed at the portion at which the object A and the object B are connected. In the present disclosure, one or more objects, i.e., at least a portion of the object A and the object B, may be defined as including a portion of the object A, the whole of the object A, a portion of the object B, the whole of the object B, a portion of the object A and a portion of the object B, a portion of the object A and the whole of the object B, the whole of the object A and a portion of the object B, and the whole of the object A and the whole of the object B. In the present disclosure, that the plate A may be a wall defining the space A may be defined as that at least a portion of the plate A may be a wall defining at least a portion of the space A.

That is, at least a portion of the plate A may be a wall forming the space A, or the plate A may be a wall forming at least a portion of the space A. In the present disclosure, a central portion of the object may be defined as a central portion among three divided portions when the object is divided into three sections based on the longitudinal direction of the object. A periphery of the object may be defined as a portion disposed at a left or right side of the central portion among the three divided portions. The periphery of the object may include a surface that is in contact with the central portion and a surface opposite thereto.

The opposite side may be defined as a border or edge of the object. Examples of the object may include a vacuum adiabatic body, a plate, a heat transfer resistor, a support, a vacuum space, and various components to be introduced in the present disclosure. In the present disclosure, a degree of heat transfer resistance may indicate a degree to which an object resists heat transfer and may be defined as a value determined by a shape including a thickness of the object, a material of the object, and a processing method of the object. The degree of the heat transfer resistance may be defined as the sum of a degree of conduction resistance, a degree of radiation resistance, and a degree of convection resistance.

The vacuum adiabatic body according to the present disclosure may include a heat transfer path defined between spaces having different temperatures, or a heat transfer path defined between plates having different temperatures. For example, the vacuum adiabatic body according to the present disclosure may include a heat transfer path through which cold is transferred from a low-temperature plate to a high-temperature plate. In the present disclosure, when a curved portion includes a first portion extending in a first direction and a second portion extending in a second direction different from the first direction, the curved portion may be defined as a portion that connects the first portion to the second portion (including 90 degrees).

In the present disclosure, the vacuum adiabatic body may optionally include a component coupling portion. The component coupling portion may be defined as a portion provided on the plate to which components are connected to each other. The component connected to the plate may be defined as a penetration portion disposed to pass through at least a portion of the plate and a surface component disposed to be connected to a surface of at least a portion of the plate.

At least one of the penetration component or the surface component may be connected to the component coupling portion. The penetration component may be a component that defines a path through which a fluid (electricity, refrigerant, water, air, etc.) passes mainly. In the present disclosure, the fluid is defined as any kind of flowing material. The fluid includes moving solids, liquids, gases, and electricity. For example, the component may be a component that defines a path through which a refrigerant for heat exchange passes, such as a suction line heat exchanger (SLHX) or a refrigerant tube.

The component may be an electric wire that supplies electricity to an apparatus. As another example, the component may be a component that defines a path through which air passes, such as a cold duct, a hot air duct, and an exhaust port. As another example, the component may be a path through which a fluid such as coolant, hot water, ice, and defrost water pass. The surface component may include at least one of a peripheral adiabatic body, a side panel, injected foam, a pre-prepared resin, a hinge, a latch, a basket, a drawer, a shelf, a light, a sensor, an evaporator, a front decor, a hotline, a heater, an exterior cover, or another adiabatic body.

As an example to which the vacuum adiabatic body is applied, the present disclosure may include an apparatus having the vacuum adiabatic body. Examples of the apparatus may include an appliance. Examples of the appliance may include home appliances including a refrigerator, a cooking appliance, a washing machine, a dishwasher, and an air conditioner, etc. As an example in which the vacuum adiabatic body is applied to the apparatus, the vacuum adiabatic body may constitute at least a portion of a body and a door of the apparatus.

As an example of the door, the vacuum adiabatic body may constitute at least a portion of a general door and a door-in-door (DID) that is in direct contact with the body. Here, the door-in-door may mean a small door placed inside the general door. As another example to which the vacuum adiabatic body is applied, the present disclosure may include a wall having the vacuum adiabatic body. Examples of the wall may include a wall of a building, which includes a window.

Hereinafter, the present disclosure will be described in detail with reference to the accompanying drawings. Each of the drawings accompanying the embodiment may be different from, exaggerated, or simply indicated from an actual article, and detailed components may be indicated with simplified features. The embodiment should not be interpreted as being limited only to the size, structure, and shape presented in the drawings. In the embodiments accompanying each of the drawings, unless the descriptions conflict with each other, some configurations in the drawings of one embodiment may be applied to some configurations of the drawings in another embodiment, and some structures in one embodiment may be applied to some structures in another embodiment.

In the description of the drawings for the embodiment, the same reference numerals may be assigned to different drawings as reference numerals of specific components constituting the embodiment. Components having the same reference number may perform the same function. For example, the first plate constituting the vacuum adiabatic body has a portion corresponding to the first space throughout all embodiments and is indicated by reference number 10. The first plate may have the same number for all embodiments and may have a portion corresponding to the first space, but the shape of the first plate may be different in each embodiment. Not only the first plate, but also the side plate, the second plate, and another adiabatic body may be understood as well.

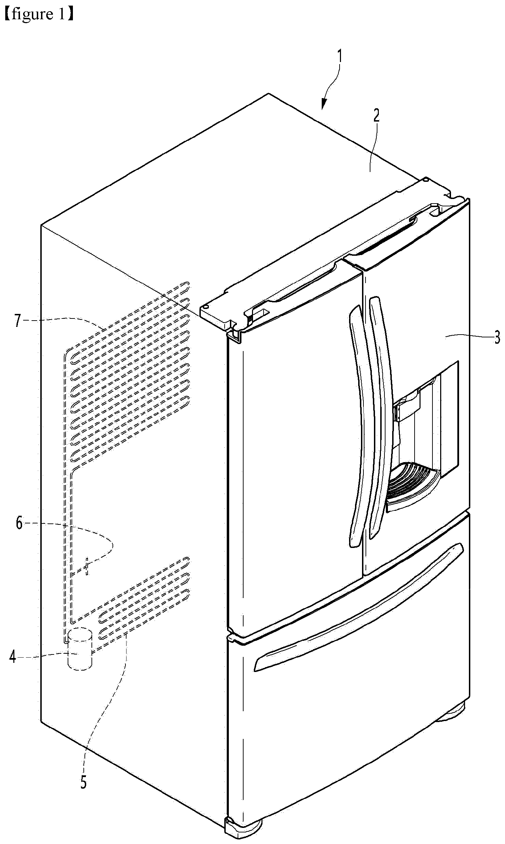

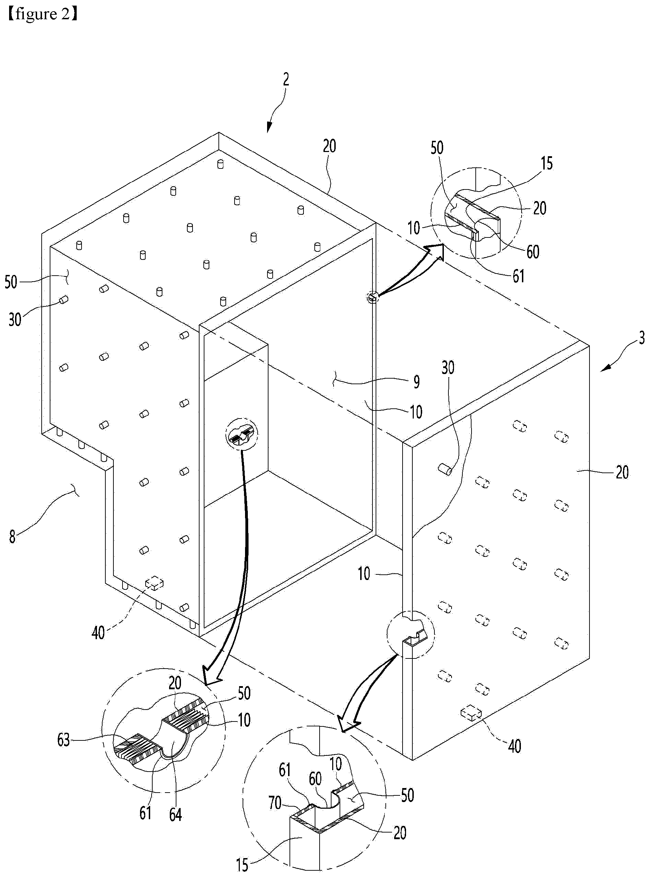

Fig. 1 is a perspective view of a refrigerator according to an embodiment, and FIG. 2 is a schematic view illustrating a vacuum adiabatic body used for a body and a door of the refrigerator. Referring to Fig. 1, the refrigerator 1 includes a main body 2 provided with a cavity 9 capable of storing storage goods and a door 3 provided to open and close the main body 2.

The door 3 may be rotatably or slidably disposed to open or close the cavity 9. The cavity 9 may provide at least one of a refrigerating compartment and a freezing compartment.

A cold source that supplies cold to the cavity may be provided. For example, the cold source may be an evaporator 7 that evaporates the refrigerant to take heat. The evaporator 7 may be connected to a compressor 4 that compresses the refrigerant evaporated to the cold source. The evaporator 7 may be connected to a condenser 5 that condenses the compressed refrigerant to the cold source. The evaporator 7 may be connected to an expander 6 that expands the refrigerant condensed in the cold source.

A fan corresponding to the evaporator and the condenser may be provided to promote heat exchange. As another example, the cold source may be a heat absorption surface of a thermoelectric element. A heat absorption sink may be connected to the heat absorption surface of the thermoelectric element. A heat sink may be connected to a heat radiation surface of the thermoelectric element. A fan corresponding to the heat absorption surface and the heat generation surface may be provided to promote heat exchange.

Referring to FIG. 2, plates 10, 15, and 20 may be walls defining the vacuum space. The plates may be walls that partition the vacuum space from an external space of the vacuum space. An example of the plates is as follows. The present disclosure may be any one of the following examples or a combination of two or more examples.

The plate may be provided as one portion or may be provided to include at least two portions connected to each other.

As a first example, the plate may include at least two portions connected to each other in a direction along a wall defining the vacuum space. Any one of the two portions may include a portion (e.g., a first portion) defining the vacuum space. The first portion may be a single portion or may include at least two portions that are sealed to each other. The other one of the two portions may include a portion (e.g., a second portion) extending from the first portion of the first plate in a direction away from the vacuum space or extending in an inner direction of the vacuum space.

As a second example, the plate may include at least two layers connected to each other in a thickness direction of the plate. Any one of the two layers may include a layer (e.g., the first portion) defining the vacuum space. The other one of the two layers may include a portion (e.g., the second portion) provided in an external space (e.g., a first space and a second space) of the vacuum space.

In this case, the second portion may be defined as an outer cover of the plate. The other one of the two layers may include a portion (e.g., the second portion) provided in the vacuum space. In this case, the second portion may be defined as an inner cover of the plate.

The plate may include a first plate 10 and a second plate 20. One surface of the first plate (the inner surface of the first plate) provides a wall defining the vacuum space, and the other surface (the outer surface of the first plate) of the first plate A wall defining the first space may be provided. The first space may be a space provided in the vicinity of the first plate, a space defined by the apparatus, or an internal space of the apparatus. In this case, the first plate may be referred to as an inner case. When the first plate and the additional member define the internal space, the first plate and the additional member may be referred to as an inner case.

The inner case may include two or more layers. In this case, one of the plurality of layers may be referred to as an inner panel. One surface of the second plate (the inner surface of the second plate) provides a wall defining the vacuum space, and the other surface (the outer surface of the first plate) of the second plate A wall defining the second space may be provided. The second space may be a space provided in vicinity of the second plate, another space defined by the apparatus, or an external space of the apparatus. In this case, the second plate may be referred to as an outer case. When the second plate and the additional member define the external space, the second plate and the additional member may be referred to as an outer case. The outer case may include two or more layers. In this case, one of the plurality of layers may be referred to as an outer panel.

The second space may be a space having a temperature higher than that of the first space or a space having a temperature lower than that of the first space. Optionally, the plate may include a side plate 15. In FIG. 2, the side plate may also perform a function of a conductive resistance sheet 60 to be described later, according to the disposition of the side plate. The side plate may include a portion extending in a height direction of a space defined between the first plate and the second plate.

The side plate may include a portion extending in a height direction of the vacuum space.

One surface of the side plate may provide a wall defining the vacuum space, and the other surface of the side plate may provide a wall defining an external space of the vacuum space. The external space of the vacuum space may be at least one of the first space or the second space or a space in which another adiabatic body to be described later is disposed. The side plate may be integrally provided by extending at least one of the first plate or the second plate or a separate component connected to at least one of the first plate or the second plate.

The plate may optionally include a curved portion. In the present disclosure, the plate including a curved portion may be referred to as a bent plate. The curved portion may include at least one of the first plate, the second plate, the side plate, between the first plate and the second plate, between the first plate and the side plate, or between the second plate and the side plate. The plate may include at least one of a first curved portion or a second curved portion, an example of which is as follows.

First, the side plate may include the first curved portion. A portion of the first curved portion may include a portion connected to the first plate. Another portion of the first curved portion may include a portion connected to the second curved portion. In this case, a curvature radius of each of the first curved portion and the second curved portion may be large. The other portion of the first curved portion may be connected to an additional straight portion or an additional curved portion, which are provided between the first curved portion and the second curved portion. In this case, a curvature radius of each of the first curved portion and the second curved portion may be small.

Second, the side plate may include the second curved portion. A portion of the second curved portion may include a portion connected to the second plate. The other portion of the second curved portion may include a portion connected to the first curved portion. In this case, a curvature radius of each of the first curved portion and the second curved portion may be large. The other portion of the second curved portion may be connected to an additional straight portion or an additional curved portion, which are provided between the first curved portion and the second curved portion. In this case, a curvature radius of each of the first curved portion and the second curved portion may be small. Here, the straight portion may be defined as a portion having a curvature radius greater than that of the curved portion. The straight portion may be understood as a portion having a perfect plane or a curvature radius greater than that of the curved portion. Third, the first plate may include the first curved portion. A portion of the first curved portion may include a portion connected to the side plate. A portion connected to the side plate may be provided at a position that is away from the second plate at a portion at which the first plate extends in the longitudinal direction of the vacuum space.

Fourth, the second plate may include the second curved portion. A portion of the second curved portion may include a portion connected to the side plate. A portion connected to the side plate may be provided at a position that is away from the first plate at a portion at which the second plate extends in the longitudinal direction of the vacuum space. The present disclosure may include a combination of any one of the first and second examples described above and any one of the third and fourth examples described above.

In the present disclosure, the vacuum space 50 may be defined as a third space. The vacuum space may be a space in which a vacuum pressure is maintained. In the present disclosure, the expression that a vacuum degree of A is higher than that of B means that a vacuum pressure of A is lower than that of B.

In the present disclosure, the seal 61 may be a portion provided between the first plate and the second plate. Examples of sealing are as follows. The present disclosure may be any one of the following examples or a combination of two or more examples. The sealing may include fusion welding for coupling the plurality of objects by melting at least a portion of the plurality of objects. For example, the first plate and the second plate may be welded by laser welding in a state in which a melting bond such as a filler metal is not interposed therebetween, a portion of the first and second plates and a portion of the component coupling portion may be welded by highfrequency brazing or the like, or a plurality of objects may be welded by a melting bond that generates heat. The sealing may include pressure welding for coupling the plurality of objects by a mechanical pressure applied to at least a portion of the plurality of objects.

For example, as a component connected to the component coupling portion, an object made of a material having a degree of deformation resistance less than that of the plate may be pressure-welded by a method such as pinch-off.

A machine room 8 may be optionally provided outside the vacuum adiabatic body. The machine room may be defined as a space in which components connected to the cold source are accommodated. Optionally, the vacuum adiabatic body may include a port 40. The port may be provided at any one side of the vacuum adiabatic body to discharge air of the vacuum space 50.

Optionally, the vacuum adiabatic body may include a conduit 64 passing through the vacuum space 50 to install components connected to the first space and the second space.

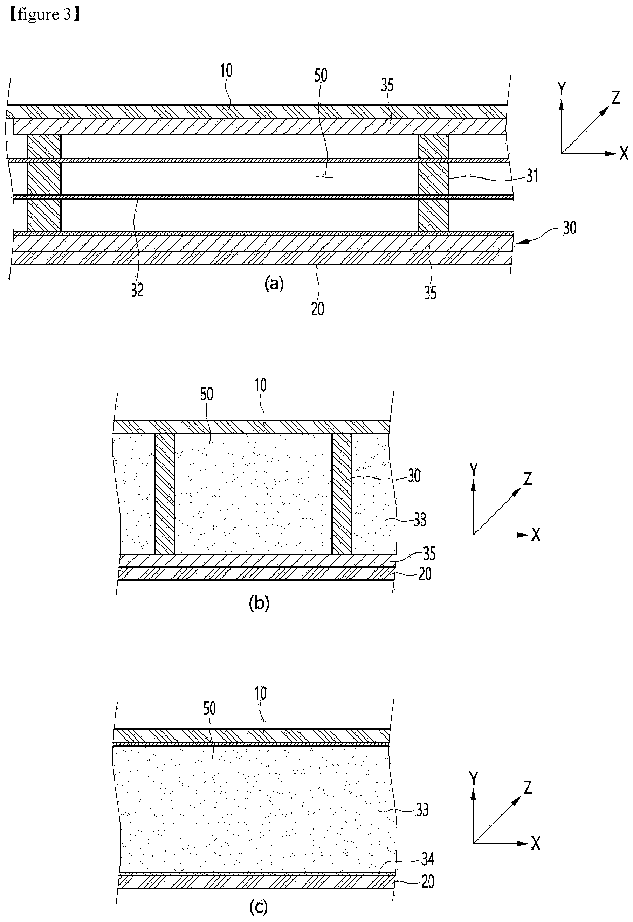

Fig. 3 is a view illustrating an example of a support that maintains the vacuum space. An example of the support is as follows. The present disclosure may be any one of the following examples or a combination of two or more examples.

The supports 30, 31, 33, and 35 may be provided to support at least a portion of the plate and a heat transfer resistor to be described later, thereby reducing deformation of at least some of the vacuum space 50, the plate, and the heat transfer resistor to be described later due to external force.

The external force may include at least one of a vacuum pressure or external force excluding the vacuum pressure. When the deformation occurs in a direction in which a height of the vacuum space is lower, the support may reduce an increase in at least one of radiant heat conduction, gas heat conduction, surface heat conduction, or support heat conduction, which will be described later.

The support may be an object provided to maintain a gap between the first plate and the second plate or an object provided to support the heat transfer resistor. The support may have a degree of deformation resistance greater than that of the plate or be provided to a portion having weak degree of deformation resistance among portions constituting the vacuum adiabatic body, the apparatus having the vacuum adiabatic body, and the wall having the vacuum adiabatic body.

According to an embodiment, a degree of deformation resistance represents a degree to which an object resists deformation due to external force applied to the object and is a value determined by a shape including a thickness of the object, a material of the object, a processing method of the object, and the like. Examples of the portions having the weak degree of deformation resistance include the vicinity of the curved portion defined by the plate, at least a portion of the curved portion, the vicinity of an opening defined in the body of the apparatus, which is provided by the plate, or at least a portion of the opening.

The support may be disposed to surround at least a portion of the curved portion or the opening or may be provided to correspond to the shape of the curved portion or the opening.

However, it is not excluded that the support is provided in other portions. The opening may be understood as a portion of the apparatus including the body and the door capable of opening or closing the opening defined in the body.

An example in which the support is provided to support the plate is as follows. First, at least a portion of the support may be provided in a space defined inside the plate. The plate may include a portion including a plurality of layers, and the support may be provided between the plurality of layers. Optionally, the support may be provided to be connected to at least a portion of the plurality of layers or be provided to support at least a portion of the plurality of layers.

Second, at least a portion of the support may be provided to be connected to a surface defined on the outside of the plate. The support may be provided in the vacuum space or an external space of the vacuum space. For example, the plate may include a plurality of layers, and the support may be provided as any one of the plurality of layers. Optionally, the support may be provided to support the other one of the plurality of layers. For example, the plate may include a plurality of portions extending in the longitudinal direction, and the support may be provided as any one of the plurality of portions.

Optionally, the support may be provided to support the other one of the plurality of parts. As further another example, the support may be provided in the vacuum space or the external space of the vacuum space as a separate component, which is distinguished from the plate. Optionally, the support may be provided to support at least a portion of a surface defined on the outside of the plate. Optionally, the support may be provided to support one surface of the first plate and one surface of the second plate.

One surface of the first plate and one surface of the second plate may be provided to face each other.

Third, the support may be provided to be integrated with the plate. An example in which the support is provided to support the heat transfer resistor may be understood instead of the example in which the support is provided to support the plate. A duplicated description will be omitted.

An example of the support in which heat transfer through the support is designed to be reduced is as follows. First, at least a portion of the components disposed in the vicinity of the support may be provided so as not to be in contact with the support or provided in an empty space provided by the support. Examples of the components include a tube or component connected to the heat transfer resistor to be described later, an exhaust port, a getter port, a tube or component passing through the vacuum space, or a tube or component of which at least a portion is disposed in the vacuum space.

Exampled of the tube may include the exhaust port, a getter port. Examples of the empty space may include an empty space provided in the support, an empty space provided between the plurality of supports, and an empty space provided between the support and a separate component that is distinguished from the support.

Optionally, at least a portion of the component may be disposed in a through-hole defined in the support, be disposed between the plurality of bars, be disposed between the plurality of connection plates, or be disposed between the plurality of support plates. Optionally, at least a portion of the component may be disposed in a spaced space between the plurality bars, be disposed in a spaced space between the plurality of connection plates, or be disposed in a spaced space between the plurality of support plates. Second, the adiabatic body may be provided on at least a portion of the support or in the vicinity of at least a portion of the support.

The adiabatic body may be provided to be in contact with the support or provided so as not to be in contact with the support. The adiabatic body may be provided at a portion in which the support and the plate are in contact with each other. The adiabatic body may be provided on at least a portion of one surface and the other surface of the support or be provided to cover at least a portion of one surface and the other surface of the support. The adiabatic body may be provided on at least a portion of a periphery of one surface and a periphery of the other surface of the support or be provided to cover at least a portion of a periphery of one surface and a periphery of the other surface of the support.

The support may include a plurality of bars. The adiabatic body may be disposed on an area from a point at which any one of the plurality of bars is disposed to a midpoint between the one bar and the surrounding bars. Third, when cold is transferred through the support, a heat source may be disposed at a position at which the heat adiabatic body described in the second example is disposed. When a temperature of the first space is lower than a temperature of the second space, the heat source may be disposed on the second plate or in the vicinity of the second plate. When heat is transmitted through the support, a cold source may be disposed at a position at which the heat adiabatic body described in the second example is disposed.

When a temperature of the first space is higher than a temperature of the second space, the cold source may be disposed on the second plate or in the vicinity of the second plate. As fourth example, the support may include a portion having heat transfer resistance higher than a metal or a portion having heat transfer resistance higher than the plate. The support may include a portion having heat transfer resistance less than that of another adiabatic body.

The support may include at least one of a non-metal material, PPS, and glass fiber (GF), low outgassing PC, PPS, or LCP. This is done for a reason in which high compressive strength, low outgassing, and a water absorption rate, low thermal conductivity, high compressive strength at a high temperature, and excellent workability are being capable of obtained.

Examples of the support may be the bars 30 and 31, the connection plate 35, the support plate 35, a porous material 33, and a filler 33. In this embodiment, the support may include any one of the above examples, or an example in which at least two examples are combined.

As first example, the support may include bars 30 and 31. The bar may include a portion extending in a direction in which the first plate and the second plate are connected to each other to support a gap between the first plate and the second plate. The bar may include a portion extending in a height direction of the vacuum space and a portion extending in a direction that is substantially perpendicular to the direction in which the plate extends. The bar may be provided to support only one of the first plate and the second plate or may be provided both the first plate and the second plate.

For example, one surface of the bar may be provided to support a portion of the plate. the other surface of the bar may be provided so as not to be in contact with the other portion of the plate. As another example, one surface of the bar may be provided to support at least a portion of the plate. the other surface of the bar may be provided to support the other portion of the plate.

The support may include a bar having an empty space therein or a plurality of bars, and an empty space are provided between the plurality of bars. In addition, the support may include a bar, and the bar may be disposed to provide an empty space between the bar and a separate component that is distinguished from the bar.

The support may selectively include a connection plate 35 including a portion connected to the bar or a portion connecting the plurality of bars to each other. The connection plate may include a portion extending in the longitudinal direction of the vacuum space or a portion extending in the direction in which the plate extends. An XZ-plane cross-sectional area of the connection plate may be greater than an XZ-plane cross-sectional area of the bar. The connection plate may be provided on at least one of one surface and the other surface of the bar or may be provided between one surface and the other surface of the bar.

At least one of one surface and the other surface of the bar may be a surface on which the bar supports the plate. The shape of the connection plate is not limited. The support may include a connection plate having an empty space therein or a plurality of connection plates. An empty space may be provided between the plurality of connection plates. In addition, the support may include a connection plate.

The connection plate may be disposed to provide an empty space between the connection plate and a separate component that is distinguished from the connection plate. As a second example, the support may include a support plate 35. The support plate may include a portion extending in the longitudinal direction of the vacuum space or a portion extending in the direction in which the plate extends. The support plate may be provided to support only one of the first plate and second plate.

The support plate may be provided to support both the first plate and the second plate. For example, one surface of the support plate may be provided to support a portion of the plate, and the other surface of the support plate may be provided so as not to be in contact with the other portion of the plate. As another example, one surface of the support plate may be provided to support at least a portion of the plate, and the other surface of the support plate may be provided to support the other portion of the plate. A cross-sectional shape of the support plate is not limited.

The support may include a support plate having an empty space therein or a plurality of support plates, and an empty space are provided between the plurality of support plates. In addition, the support may include a support plate, and the support plate may be disposed to provide an empty space between the support plate and a separate component that is distinguished from the support plate.

As a third example, the support may include a porous material 33 or a filler 33. The inside of the vacuum space may be supported by the porous material or the filler. The inside of the vacuum space may be completely filled by the porous material or the filler. The support may include a plurality of porous materials or a plurality of fillers. The plurality of porous materials or the plurality of fillers may be disposed to be in contact with each other.

When an empty space is provided inside the porous material, provided between the plurality of porous materials, or provided between the porous material and a separate component that is distinguished from the porous material, the porous material may be understood as including any one of the aforementioned bar, connection plate, and support plate.

When an empty space is provided inside the filler, provided between the plurality of fillers, or provided between the filler and a separate component that is distinguished from the filler, the filler may be understood as including any one of the aforementioned bar, connection plate, and support plate. The support according to the present disclosure may include any one of the above examples or an example in which two or more examples are combined.

Referring to Fig. 3a, as an embodiment, the support may include a bar 31 and a connection plate and support plate 35. The connection plate and the supporting plate may be designed separately. Referring to Fig. 3b, as an embodiment, the support may include a bar 31, a connection plate and support plate 35, and a porous material 33 filled in the vacuum space. The porous material 33 may have emissivity greater than that of stainless steel, which is a material of the plate, but since the vacuum space is filled, resistance efficiency of radiant heat transfer is high.

The porous material may also function as a heat transfer resistor to be described later. More preferably, the porous material may perform a function of a radiation resistance sheet to be described later. Referring to Fig. 3c, as an embodiment, the support may include a porous material 33 or a filler 33. The porous material 33 and the filler may be provided in a compressed state to maintain a gap between the vacuum space.

The film 34 may be provided in a state in which a hole is punched as, for example, a PE material. The porous material 33 or the filler may perform both a function of the heat transfer resistor and a function of the support, which will be described later. More preferably, the porous material may perform both a function of the radiation resistance sheet and a function of the support to be described later.

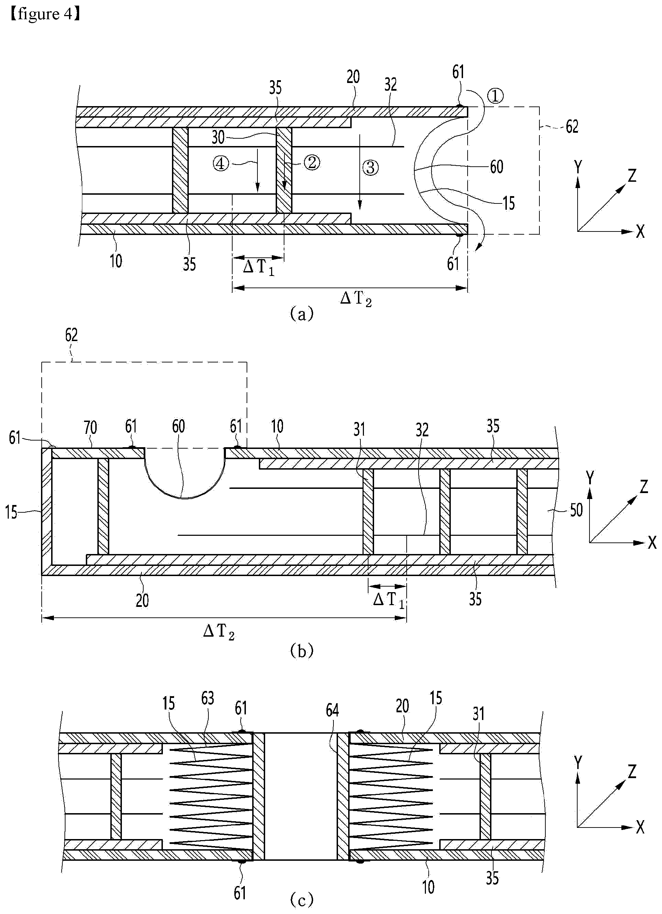

Fig. 4 is a view for explaining an example of the vacuum adiabatic body based on heat transfer resistors 32, 33, 60, and 63 (e.g., thermal insulator and a heat transfer resistance body). The vacuum adiabatic body according to the present disclosure may optionally include a heat transfer resistor. An example of the heat transfer resistor is as follows. The present disclosure may be any one of the following examples or a combination of two or more examples.

The heat transfer resistors 32, 33, 60, and 63 may be objects that reduce an amount of heat transfer between the first space and the second space or objects that reduce an amount of heat transfer between the first plate and the second plate. The heat transfer resistor may be disposed on a heat transfer path defined between the first space and the second space. The heat transfer resistor may be disposed on a heat transfer path formed between the first plate and the second plate. The heat transfer resistor may include a portion extending in a direction along a wall defining the vacuum space.

The heat transfer resistor may include a portion extending in a direction in which the plate extends. Optionally, the heat transfer resistor may include a portion extending from the plate in a direction away from the vacuum space. The heat transfer resistor may be provided on at least a portion of the periphery of the first plate or the periphery of the second plate.

The heat transfer resistor may be provided on at least a portion of an edge of the first plate or an edge of the second plate. The heat transfer resistor may be provided at a portion, in which the through-hole is defined. The heat transfer resistor may be provided as a tube connected to the through-hole. A separate tube or a separate component that is distinguished from the tube may be disposed inside the tube.

Exampled of the aforementioned tube may include the exhaust port, a getter port The heat transfer resistor may include a portion having heat transfer resistance greater than that of the plate. In this case, adiabatic performance of the vacuum adiabatic body may be further improved. A shield 62 may be provided on the outside of the heat transfer resistor to be insulated. The inside of the heat transfer resistor may be insulated by the vacuum space. The shield may be provided as a porous material or a filler that is in contact with the inside of the heat transfer resistor.

The shield may be an adiabatic structure that is exemplified by a separate gasket placed outside the inside of the heat transfer resistor. The heat transfer resistor may be a wall defining the third space.

An example in which the heat transfer resistor is connected to the plate may be understood as replacing the support with the heat transfer resistor in an example in which the support is provided to support the plate. A duplicate description will be omitted. The example in which the heat transfer resistor is connected to the support may be understood as replacing the plate with the support in the example in which the heat transfer resistor is connected to the plate. A duplicate description will be omitted. The example of reducing heat transfer via the heat transfer body may be applied as a substitute the example of reducing the heat transfer via the support, and thus, the same explanation will be omitted.

In the present disclosure, the heat transfer resistor may be one of a radiation resistance sheet 32, a porous material 33, a filler 33, and a conductive resistance sheet. In the present disclosure, the heat transfer resistor may include a combination of at least two of the radiation resistance sheet 32, the porous material 33, the filler 33, and the conductive resistance sheet. As a first example, the heat transfer resistor may include a radiation resistance sheet 32.

The radiation resistance sheet may include a portion having heat transfer resistance greater than that of the plate, and the heat transfer resistance may be a degree of resistance to heat transfer by radiation. The support may perform a function of the radiation resistance sheet together. A conductive resistance sheet to be described later may perform the function of the radiation resistance sheet together. As a second example, the heat transfer resistor may include conduction resistance sheets 60 and 63.

The conductive resistance sheet may include a portion having heat transfer resistance greater than that of the plate, and the heat transfer resistance may be a degree of resistance to heat transfer by conduction. For example, the conductive resistance sheet may have a thickness less than that of at least a portion of the plate. As another example, the conductive resistance sheet may include one end and the other end, and a length of the conductive resistance sheet may be longer than a straight distance connecting one end of the conductive resistance sheet to the other end of the conductive resistance sheet.

As another example, the conductive resistance sheet may include a material having resistance to heat transfer greater than that of the plate by conduction. As another example, the heat transfer resistor may include a portion having a curvature radius less than that of the plate.

Referring to Fig. 4a, for example, a conductive resistance sheet may be provided on a side plate connecting the first plate to the second plate. Referring to Fig. 4b, for example, a conductive resistance sheet 60 may be provided on at least a portion of the first plate and the second plate. A connection frame 70 may be further provided outside the conductive resistance sheet. The connection frame may be a portion from which the first plate or the second plate extends or a portion from which the side plate extends.

Optionally, the connection frame 70 may include a portion at which a component for sealing the door and the body and a component disposed outside the vacuum space such as the exhaust port and the getter port, which are required for the exhaust process, are connected to each other.

Referring to Fig. 4c, for example, a conductive resistance sheet may be provided on a side plate connecting the first plate to the second plate. The conductive resistance sheet may be installed in a through-hole passing through the vacuum space. The conduit 64 may be provided separately outside the conductive resistance sheet. The conductive resistance sheet may be provided in a pleated shape. Through this, the heat transfer path may be lengthened, and deformation due to a pressure difference may be prevented. A separate shielding member for insulating the conductive resistance sheet 63 may also be provided. The conductive resistance sheet may include a portion having a degree of deformation resistance less than that of at least one of the plate, the radiation resistance sheet, or the support. The radiation resistance sheet may include a portion having a degree of deformation resistance less than that of at least one of the plate or the support. The plate may include a portion having a degree of deformation resistance less than that of the support. The conductive resistance sheet may include a portion having conductive heat transfer resistance greater than that of at least one of the plate, the radiation resistance sheet, or the support. The radiation resistance sheet may include a portion having radiation heat transfer resistance greater than that of at least one of the plate, the conductive resistance sheet, or the support. The support may include a portion having heat transfer resistance greater than that of the plate.

For example, at least one of the plate, the conductive resistance sheet, or the connection frame may include stainless steel material, the radiation resistance sheet may include aluminum, and the support may include a resin material.

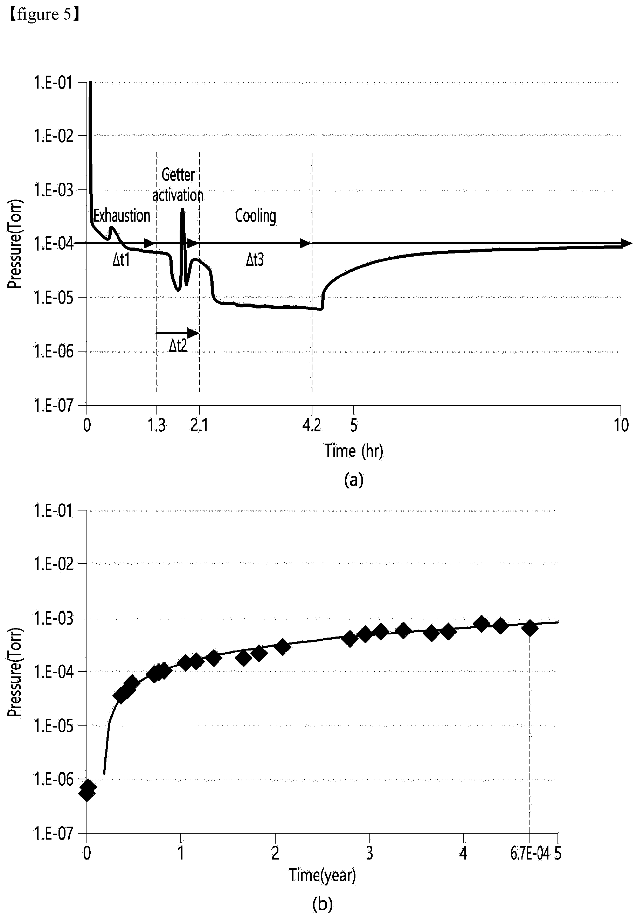

Fig. 5 is a graph for observing a process of exhausting the inside of the vacuum adiabatic body with a time and pressure when the support is used. An example of a vacuum adiabatic body vacuum exhaust process vacuum is as follows. The present disclosure may be any one of the following examples or a combination of two or more examples.

While the exhaust process is being performed, an outgassing process, which is a process in which a gas of the vacuum space is discharged, or a potential gas remaining in the components of the vacuum adiabatic body is discharged, may be performed. As an example of the outgassing process, the exhaust process may include at least one of heating or drying the vacuum adiabatic body, providing a vacuum pressure to the vacuum adiabatic body, or providing a getter to the vacuum adiabatic body. In this case, it is possible to promote the vaporization and exhaust of the potential gas remaining in the component provided in the vacuum space. The exhaust process may include a process of cooling the vacuum adiabatic body. The cooling process may be performed after the process of heating or drying the vacuum adiabatic body is performed. The process of heating or drying the vacuum adiabatic body process of providing the vacuum pressure to the vacuum adiabatic body may be performed together.

The process of heating or drying the vacuum adiabatic body and the process of providing the getter to the vacuum adiabatic body may be performed together. After the process of heating or drying the vacuum adiabatic body is performed, the process of cooling the vacuum adiabatic body may be performed.

The process of providing the vacuum pressure to the vacuum adiabatic body and the process of providing the getter to the vacuum adiabatic body may be performed so as not to overlap each other.

For example, after the process of providing the vacuum pressure to the vacuum adiabatic body is performed, the process of providing the getter to the vacuum adiabatic body may be performed. When the vacuum pressure is provided to the vacuum adiabatic body, a pressure of the vacuum space may drop to a certain level and then no longer drop. Here, after stopping the process of providing the vacuum pressure to the vacuum adiabatic body, the getter may be input. As an example of stopping the process of providing the vacuum pressure to the vacuum adiabatic body, an operation of a vacuum pump connected to the vacuum space may be stopped. When inputting the getter, the process of heating or drying the vacuum adiabatic body may be performed together. Through this, the outgassing may be promoted. As another example, after the process of providing the getter to the vacuum adiabatic body is performed, the process of providing the vacuum pressure to the vacuum adiabatic body may be performed.

The time during which the vacuum adiabatic body vacuum exhaust process is performed may be referred to as a vacuum exhaust time. The vacuum exhaust time includes at least one of a time Δ1 during which the process of heating or drying the vacuum adiabatic body is performed, a time Δt2 during which the process of maintaining the getter in the vacuum adiabatic body is performed, of a time Δt3 during which the process of cooling the vacuum adiabatic body is performed. Examples of times Δt1, Δt2, and Δt3 are as follows. The present disclosure may be any one of the following examples or a combination of two or more examples. In the vacuum adiabatic body vacuum exhaust process, the time Δt1 may be a time t1a or more and a time t1b or less. As a first example, the time t1a may be greater than or equal to about 0.2 hr and less than or equal to about 0.5 hr. The time t1b may be greater than or equal to about 1 hr and less than or equal to about 24.0 hr.

The time Δt1 may be about 0.3 hr or more and about 12.0 hr or less. The time Δt1 may be about 0.4 hr or more and about 8.0 hr or less. The time Δt1 may be about 0.5 hr or more and about 4.0 hr or less. In this case, even if the Δt1 is kept as short as possible, the sufficient outgassing may be applied to the vacuum adiabatic body. For example, this case may include a case in which a component of the vacuum adiabatic body, which is exposed to the vacuum space, among the components of the vacuum adiabatic body, has an outgassing rate (%) less than that of any one of the component of the vacuum adiabatic body, which is exposed to the external space of the vacuum space. Specifically, the component exposed to the vacuum space may include a portion having a outgassing rate less than that of a thermoplastic polymer.

More specifically, the support or the radiation resistance sheet may be disposed in the vacuum space, and the outgassing rate of the support may be less than that of the thermoplastic plastic. As another example, this case may include a case in which a component of the vacuum adiabatic body, which is exposed to the vacuum space, among the components of the vacuum adiabatic body, has a max operating temperature (°C) greater than that of any one of the component of the vacuum adiabatic body, which is exposed to the external space of the vacuum space.

In this case, the vacuum adiabatic body may be heated to a higher temperature to increase in outgassing rate. For example, the component exposed to the vacuum space may include a portion having an operating temperature greater than that of the thermoplastic polymer. As a more specific example, the support or the radiation resistance sheet may be disposed in the vacuum space, and a use temperature of the support may be higher than that of the thermoplastic plastic.

As another example, among the components of the vacuum adiabatic body, the component exposed to the vacuum space may contain more metallic portion than a non-metallic portion. That is, a mass of the metallic portion may be greater than a mass of the non-metallic portion, a volume of the metallic portion may be greater than a volume of the non-metallic portion, or an area of the metallic portion exposed to the vacuum space may be greater than an area exposed to the non-metallic portion of the vacuum space. When the components exposed to the vacuum space are provided in plurality, the sum of the volume of the metal material included in the first component and the volume of the metal material included in the second component may be greater than that of the volume of the non-metal material included in the first component and the volume of the non-metal material included in the second component. When the components exposed to the vacuum space are provided in plurality, the sum of the mass of the metal material included in the first component and the mass of the metal material included in the second component may be greater than that of the mass of the non-metal material included in the first component and the mass of the non-metal material included in the second component. When the components exposed to the vacuum space are provided in plurality, the sum of the area of the metal material, which is exposed to the vacuum space and included in the first component, and an area of the metal material, which is exposed to the vacuum space and included in the second component, may be greater than that of the area of the non-metal material, which is exposed to the vacuum space and included in the first component, and an area of the non-metal material, which is exposed to the vacuum space and included in the second component.

As a second example, the time t1a may be greater than or equal to about 0.5 hr and less than or equal to about 1 hr. The time t1b may be greater than or equal to about 24.0 hr and less than or equal to about 65 hr. The time Δt1 may be about 1.0 hr or more and about 48.0 hr or less. The time Δt1 may be about 2 hr or more and about 24.0 hr or less. The time Δt1 may be about 3 hr or more and about 12.0 hr or less.

In this case, it may be the vacuum adiabatic body that needs to maintain the Δt1 as long as possible. In this case, a case opposite to the examples described in the first example or a case in which the component exposed to the vacuum space is made of a thermoplastic material may be an example. A duplicated description will be omitted. In the vacuum adiabatic body vacuum exhaust process, the time Δt1 may be a time t1a or more and a time t1b or less. The time t2a may be greater than or equal to about 0.1 hr and less than or equal to about 0.3 hr. The time t2b may be greater than or equal to about 1 hr and less than or equal to about 5.0 hr.

The time Δt2 may be about 0.2 hr or more and about 3.0 hr or less. The time Δt2 may be about 0.3 hr or more and about 2.0 hr or less. The time Δt2 may be about 0.5 hr or more and about 1.5 hr or less. In this case, even if the time Δt2 is kept as short as possible, the sufficient outgassing through the getter may be applied to the vacuum adiabatic body.

In the vacuum adiabatic body vacuum exhaust process, the time Δt3 may be a time t3a or more and a time t3b or less.

The time t3a may be greater than or equal to about 0.2 hr and less than or equal to about 0.8 hr. The time t3b may be greater than or equal to about 1 hr and less than or equal to about 65.0 hr. The time Δt3 may be about 0.2 hr or more and about 48.0 hr or less. The time Δt3 may be about 0.3 hr or more and about 24.0 hr or less. The time Δt3 may be about 0.4 hr or more and about 12.0 hr or less. The time Δt3 may be about 0.5 hr or more and about 5.0 hr or less. After the heating or drying process is performed during the exhaust process, the cooling process may be performed.

For example, when the heating and/or drying process is performed for a long time, the time Δt3 may be long. The vacuum adiabatic body according to the present disclosure may be manufactured so that the time Δt1 is greater than the time Δt2, the time Δt1 is less than or equal to the time Δt3, or the time Δt3 is greater than the time Δt2.

The following relational expression is satisfied: Δt2<Δt1<Δt3. The vacuum adiabatic body according to an embodiment may be manufactured so that the relational expression: Δt1+Δt2+Δt3 may be greater than or equal to about 0.3 hr and less than or equal to about 70 hr, be greater than or equal to about 1 hr and less than or equal to about 65 hr, or be greater than or equal to about 2 hr and less than or equal to about 24 hr. The relational expression: Δt1+Δt2+Δt3 may be manufactured to be greater than or equal to about 3 hr and less than or equal to about 6 hr.

An example of the vacuum pressure condition during the exhaust process is as follows. The present disclosure may be any one of the following examples or a combination of two or more examples. A minimum value of the vacuum pressure in the vacuum space during the exhaust process may be greater than about 1.8E-6 Torr. The minimum value of the vacuum pressure may be greater than about 1.8E-6 Torr and less than or equal to about 1.0E-4 Torr, be greater than about 0.5E-6 Torr and less than or equal to about 1.0E-4 Torr, or be greater than about 0.5E-6 Torr and less than or equal to about 0.5E-5 Torr. The minimum value of the vacuum pressure may be greater than about 0.5E-6 Torr and less than about 1.0E-5 Torr.

As such, the limitation in which the minimum value of the vacuum pressure provided during the exhaust process is because, even if the pressure is reduced through the vacuum pump during the exhaust process, the decrease in vacuum pressure is slowed below a certain level.

As an embodiment, after the exhaust process is performed, the vacuum pressure of the vacuum space may be maintained at a pressure greater than or equal to about 1.0E-5 Torr and less than or equal to about 5.0E-1 Torr. The maintained vacuum pressure may be greater than or equal to about 1.0E-5 Torr and less than or equal to about 1.0E-1 Torr, be greater than or equal to about 1.0E-5 Torr and less than or equal to about 1.0E-2 Torr, be greater than or equal to about 1.0E-4 Torr and less than or equal to about 1.0E-2 Torr, or be greater than or equal to about 1.0E-5 Torr and less than or equal to about 1.0E-3 Torr. As a result of predicting the change in vacuum pressure with an accelerated experiment of two example products, one product may be provided so that the vacuum pressure is maintained below about 1.0E-04Torr even after about 16.3 years, and the other product may be provided so that the vacuum pressure is maintained below about 1.0E-04Torr even after about 17.8 years.

As described above, the vacuum pressure of the vacuum adiabatic body may be used industrially only when it is maintained below a predetermined level even if there is a change over time.

Fig. 5a is a graph of an elapsing time and pressure in the exhaust process according to an example, and Fig. 5b is a view explaining results of a vacuum maintenance test in the acceleration experiment of the vacuum adiabatic body of the refrigerator having an internal volume of about 128 liters.

Referring to Fig. 5b, it is seen that the vacuum pressure gradually increases according to the aging. For example, it is confirmed that the vacuum pressure is about 6.7E-04 Torr after about 4.7 years, about 1.7E-03 Torr after about 10 years, and about 1.0E-02 Torr after about 59 years. According to these experimental results, it is confirmed that the vacuum adiabatic body according to the embodiment is sufficiently industrially applicable.

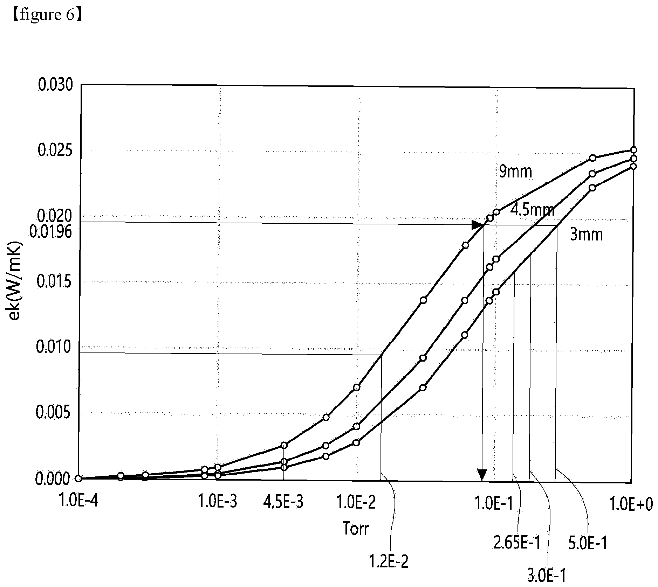

Fig. 6 is a graph illustrating results obtained by comparing the vacuum pressure with gas conductivity. Referring to Fig. 6, gas conductivity with respect to the vacuum pressure depending on a size of the gap in the vacuum space 50 was represented as a graph of effective heat transfer coefficient (eK). The effective heat transfer coefficient (eK) was measured when the gap in the vacuum space 50 has three values of about 3 mm, about 4.5 mm, and about 9 mm. The gap in the vacuum space 50 is defined as follows. When the radiation resistance sheet 32 exists inside surface vacuum space 50, the gap is a distance between the radiation resistance sheet 32 and the plate adjacent thereto. When the radiation resistance sheet 32 does not exist inside surface vacuum space 50, the gap is a distance between the first and second plates. It was seen that, since the size of the gap is small at a point corresponding to a typical effective heat transfer coefficient of about 0.0196 W/mK, which is provided to an adiabatic material formed by foaming polyurethane, the vacuum pressure is about 5.0E-1 Torr even when the size of the gap is about 3 mm.

Meanwhile, it was seen that the point at which reduction in adiabatic effect caused by the gas conduction heat is saturated even though the vacuum pressure decreases is a point at which the vacuum pressure is approximately 4.5E-3 Torr. The vacuum pressure of about 4.5E-3 Torr may be defined as the point at which the reduction in adiabatic effect caused by the gas conduction heat is saturated.

Also, when the effective heat transfer coefficient is about 0.01 W/mK, the vacuum pressure is about 1.2E-2 Torr. An example of a range of the vacuum pressure in the vacuum space according to the gap is presented. The support may include at least one of a bar, a connection plate, or a support plate. In this case, when the gap of the vacuum space is greater than or equal to about 3 mm, the vacuum pressure may be greater than or equal to A and less than about 5E-1 Torr, or be greater than about 2.65E-1 Torr and less than about 5E-1 Torr. As another example, the support may include at least one of a bar, a connection plate, or a support plate. In this case, when the gap of the vacuum space is greater than or equal to about 4.5 mm, the vacuum pressure may be greater than or equal to A and less than about 3E-1 Torr, or be greater than about 1.2E-2 Torr and less than about 5E-1 Torr.

As another example, the support may include at least one of a bar, a connection plate, or a support plate, and when the gap of the vacuum space is greater than or equal to about 9 mm, the vacuum pressure may be greater than or equal to A and less than about 1.0X10^-1 Torr or be greater than about 4.5E-3 Torr and less than about SE-1 Torr.

Here, the A may be greater than or equal to about 1.0X10^-6 Torr and less than or equal to about 1.0E-5 Torr. The A may be greater than or equal to about 1.0X10^-5 Torr and less than or equal to about 1.0E-4 Torr. When the support includes a porous material or a filler, the vacuum pressure may be greater than or equal to about 4.7E-2 Torr and less than or equal to about 5E-1 Torr. In this case, it is understood that the size of the gap ranges from several micrometers to several hundreds of micrometers. When the support and the porous material are provided together in the vacuum space, a vacuum pressure may be created and used, which is middle between the vacuum pressure when only the support is used and the vacuum pressure when only the porous material is used.

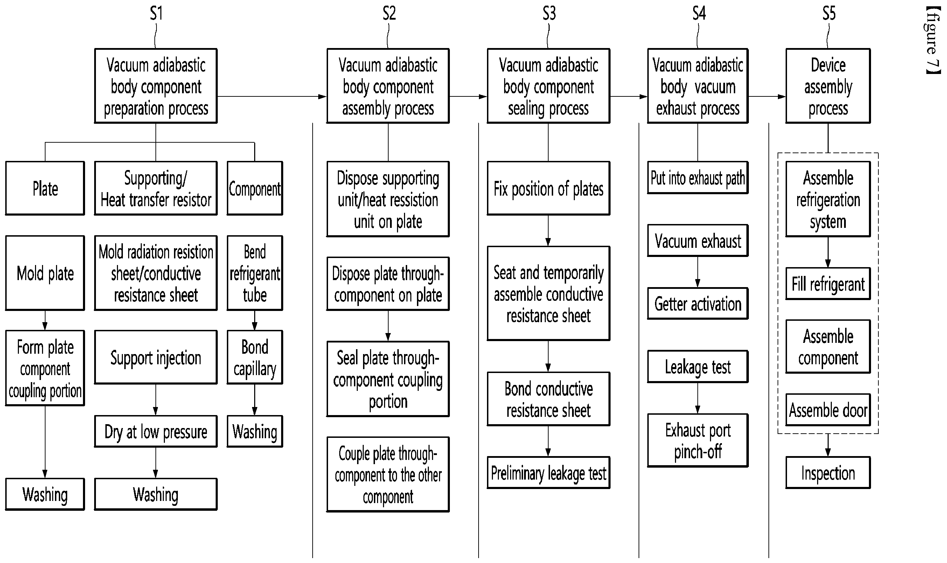

Fig. 7 is a view for explaining a process of manufacturing the vacuum adiabatic body.

Optionally, the vacuum adiabatic body may be manufactured by a vacuum adiabatic body component preparation process in which the first plate and the second plate are prepared in advance. Optionally, the vacuum adiabatic body may be manufactured by a vacuum adiabatic body component assembly process in which the first plate and the second plate are assembled. Optionally, the vacuum adiabatic body may be manufactured by a vacuum adiabatic body vacuum exhaust process in which a gas in the space defined between the first plate and the second plate is discharged. Optionally, after the vacuum adiabatic body component preparation process is performed, the vacuum adiabatic body component assembly process or the vacuum adiabatic body exhaust process may be performed.

Optionally, after the vacuum adiabatic body component assembly process is performed, the vacuum adiabatic body vacuum exhaust process may be performed. Optionally, the vacuum adiabatic body may be manufactured by the vacuum adiabatic body component sealing process (S3) in which the space between the first plate and the second plate is sealed. The vacuum adiabatic body component sealing process may be performed before the vacuum adiabatic body vacuum exhaust process (S4). The vacuum adiabatic body may be manufactured as an object with a specific purpose by an apparatus assembly process (S5) in which the vacuum adiabatic body is combined with the components constituting the apparatus. The apparatus assembly process may be performed after the vacuum adiabatic body vacuum exhaust process.

Here, the components constituting the apparatus means components constituting the apparatus together with the vacuum adiabatic body.

The vacuum adiabatic body component preparation process (S1) is a process in which components constituting the vacuum adiabatic body are prepared or manufactured. Examples of the components constituting the vacuum adiabatic body may include various components such as a plate, a support, a heat transfer resistor, and a tube. The vacuum adiabatic body component assembly process (S2) is a process in which the prepared components are assembled. The vacuum adiabatic body component assembly process may include a process of disposing at least a portion of the support and the heat transfer resistor on at least a portion of the plate.

For example, the vacuum adiabatic body component assembly process may include a process of disposing at least a portion of the support and the heat transfer resistor between the first plate and the second plate. Optionally, the vacuum adiabatic body component assembly process may include a process of disposing a penetration component on at least a portion of the plate. For example, the vacuum adiabatic body component assembly process may include a process of disposing the penetration component or a surface component between the first and second plates. After the penetration component may be disposed between the first plate and the second plate, the penetration component may be connected or sealed to the penetration component coupling portion.

An example of a vacuum adiabatic body vacuum exhaust process vacuum is as follows. The present disclosure may be any one of the, examples or a combination of two or more examples. The vacuum adiabatic body vacuum exhaust process may include at least one of a process of inputting the vacuum adiabatic body into an exhaust passage, a getter activation process, a process of checking vacuum leakage and a process of closing the exhaust port. The process of forming the coupling part may be performed in at least one of the vacuum adiabatic body component preparation process, the vacuum adiabatic body component assembly process, or the apparatus assembly process. Before the vacuum adiabatic body exhaust process is performed, a process of washing the components constituting the vacuum adiabatic body may be performed. Optionally, the washing process may include a process of applying ultrasonic waves to the components constituting the vacuum adiabatic body or a process of providing ethanol or a material containing ethanol to surfaces of the components constituting the vacuum adiabatic body. The ultrasonic wave may have an intensity between about 10 kHz and about 50 kHz. A content of ethanol in the material may be about 50% or more. For example, the content of ethanol in the material may range of about 50% to about 90%. As another example, the content of ethanol in the material may range of about 60% to about 80%.

As another example, the content of ethanol in the material may be range of about 65% to about 75%. Optionally, after the washing process is performed, a process of drying the components constituting the vacuum adiabatic body may be performed. Optionally, after the washing process is performed, a process of heating the components constituting the vacuum adiabatic body may be performed.

A heat exchanger may be installed in a vacuum adiabatic body. The following may be optional. The heat exchanger may connect a first space to a second space. The heat exchanger may exchange heat between a refrigerant discharged from an evaporator and a refrigerant suctioned into the evaporator. At least a portion of the heat exchanger may be placed in a third space.

Matters and descriptions disclosed in any drawing of this document may provide different embodiments. Contents disclosed in any drawing of this document may be applied to the contents of other drawings.

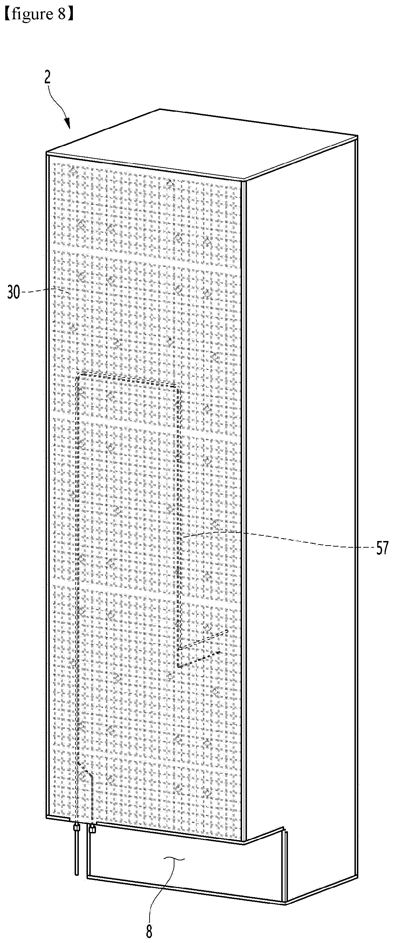

FIG. 8 is a view illustrating an example in which a support and a heat exchanger are installed.

The following may be optional. Referring to FIG. 8, the heat exchanger 57 may be installed on a rear surface of the vacuum adiabatic body. A first end portion of a refrigerant tube constituting the heat exchanger may be led out to a machine room 8. The machine room may be placed in a second space. A second end portion of the refrigerant tube constituting the heat exchanger may be led out to a low-temperature space. The low-temperature space may be placed in the first space. The heat exchanger may be provided to a predetermined length to enable sufficient heat exchange. The heat exchanger may have a bent part. The heat exchanger may have a straight part extending in a straight line. At least two straight parts may be provided. The bent part may be provided between the straight parts. At least one bent part may be bent in an extension direction of the third space. At least one bent part may be bent in a thickness direction of the third space.

The following may be optional. A support 30 placed on a rear surface of the vacuum adiabatic body may be provided as a single structure of one body. The single structure may be provided as a structure in which at least two individual units are connected to each other. The units 300 may be respectively coupled vertically. The units 301 may be coupled so that the upper and lower units are alternately disposed. Thus, the single structure may be provided. There may be a left-right gap in a left and right direction of each of the units. The bent part may not be placed in the left-right gap of each unit. Thus, the positioning of the bent part may be convenient. Thus, the heat exchanger may be stably supported. When there are two bent parts, the two bent parts may be placed on the same unit. The heat exchanger may pass through at least two or more units.

The following may be optional. The support may be provided as a lattice structure. The heat exchanger may pass between the lattices. The heat exchanger may move while being placed on the single structure. The heat exchanger may be placed on the plate while being placed on the single structure. The support may be made of PPS. The support may be made of PPS containing glass fiber.

Hereinafter, the unit will be described. The same content in embodiments will be described in only one embodiment.

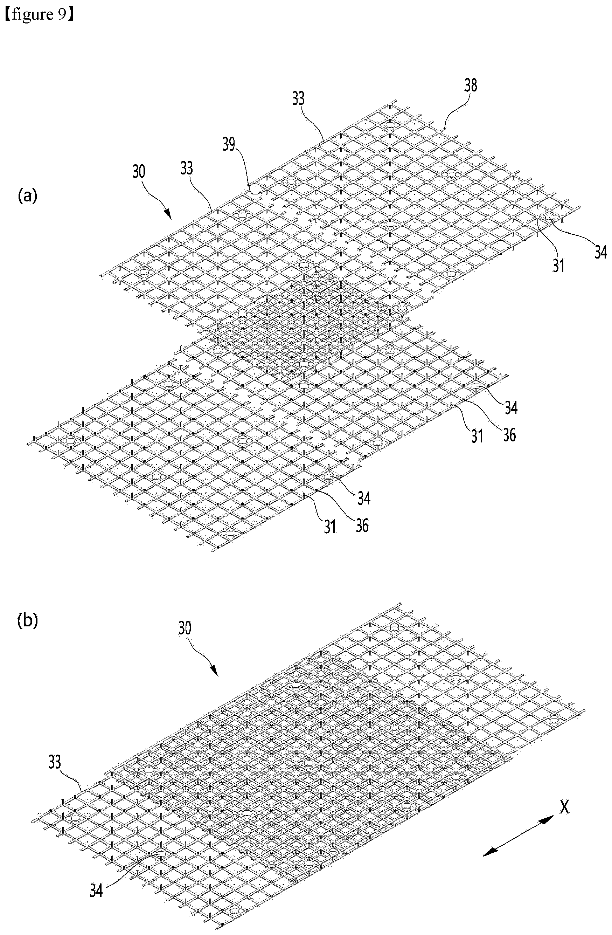

FIG. 9 is a view illustrating an example of the unit of the support and the coupling of the unit. FIG. 9(a) is a view illustrating an alignment of the units in a state of preparation for coupling. FIG. 9(b) illustrates the support to which the unit is attached. Descriptions will be made with reference to FIG. 9.

The following may be applied optionally. The unit 33 may be provided in one type. The unit may also be cut to be used. The units may be coupled to face each other vertically. Any unit may be coupled by moving relative to the unit to be coupled in at least one axial direction among the two axial directions. The unit may be provided with a plurality of grids. The unit may be provided with a first supporting body 31. The first supporting body may be a bar 31. The bar may extend in a direction intersecting the support plate 35. The unit may be provided with a second supporting body 36. The second supporting body may be a coupling tool. The coupling tool may be provided on a portion of an edge of the unit. The coupling tool may have an insertion groove. The unit may be provided with a third supporting body 38. The third supporting body may be provided on a portion of the edge of the unit. The third supporting body may be coupled to the second supporting body. The third supporting body may be a protrusion. The protrusion may be fitted into and fixed to the coupling tool. The unit may be provided with a fourth supporting body 39. The fourth supporting body may be a groove. The fourth supporting body may be coupled to the first supporting body. The fourth supporting body member may have a portion that is opened in a direction intersecting with the support plate 35. The unit may be provided as an injection molded product. The unit may be provided with an injection gate through which an injection fluid is injected. The first and fourth supporting bodies may be provided alternately along the grid. Thus, the units may be coupled to each other in a vertical direction. Thus, the units may be coupled to each other so that the first and fourth supporting bodies face each other. Thus, the units may be coupled to each other in the vertical direction even though the units are spaced apart from each other in at least one of an X-axis or Y-axis direction along the extension direction of the vacuum space. Here, the spaced unit may be given as a 2n (where n is a natural number) grid (which may be called a grid or pitch). The second and third supporting bodies may be provided on opposing edges of the unit. As a result, the units may be coupled in the left and right direction. The left and right direction may be at least one of the X-axis or Y-axis direction along the extension direction of the vacuum space.

The following may be applied optionally. In the support, at least two of the injection gates may overlap each other vertically. The overlapping injection gates may be disposed at the center of the unit. In the support, at least two of the injection gates may not overlap each other vertically. The non-overlapping injection gates may be disposed on the periphery of the unit.

The following may be applied optionally. An area in which an interval between the injection gates is short and an area in which an interval between the injection gates is long may be distinguished from each other. The area of the injection gate having the short interval may be disposed at a central portion of the unit. The area of the injection gate having the short interval may include an area on which the injection gates overlap each other vertically. The area of the injection gate having the long interval may be disposed on the periphery of the unit. The area of the injection gate having the short interval may include an area on which the injection gates do not overlap vertically.

The following may be applied optionally. Any support may not be provided on any edge of the unit. Thus, it may not be coupled in one direction.

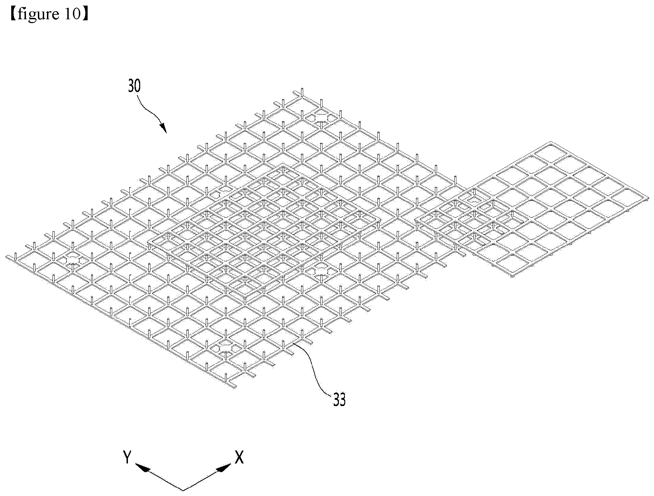

FIG. 10 is a view illustrating an example of the unit of the support and the coupling of the unit. Descriptions will be made with reference to FIG. 10.

The second and third supporting bodies may be coupled to each other. The first and fourth supporting bodies may be coupled to each other. The following contents may be applied optionally. The unit may be coupled to a lower side in the extension direction (two-axis direction) of the vacuum space. The unit may be coupled in the extension direction (two-axial direction) of the upper vacuum space. The lower unit and the upper unit may be connected to each other. The unit may be infinitely expanded in the extension direction of the vacuum adiabatic body.

The unit may have various examples. An embodiment of the unit and various example of the support implemented with the unit will be described. Before the description, terms will be defined. A shape in which the units are coupled in the same vertical shape with only different rotation angles is called a symmetrical alignment of the units. The symmetrical alignment may be called non-overlapping. Here, the non-overlapping may mean that edges of the units are not aligned vertically with each other. The state of the symmetrical alignment may mean that an edge of a unit at one side of the upper and lower sides is aligned with an edge of a unit at the other side. When the edge of the unit at either side of the upper or lower side is not aligned with the edge of the unit at the other side, this may be called a misalignment of the units. The misalignment may be called overlapping. Here, the overlapping may mean that the edges of the units are aligned with each other vertically.

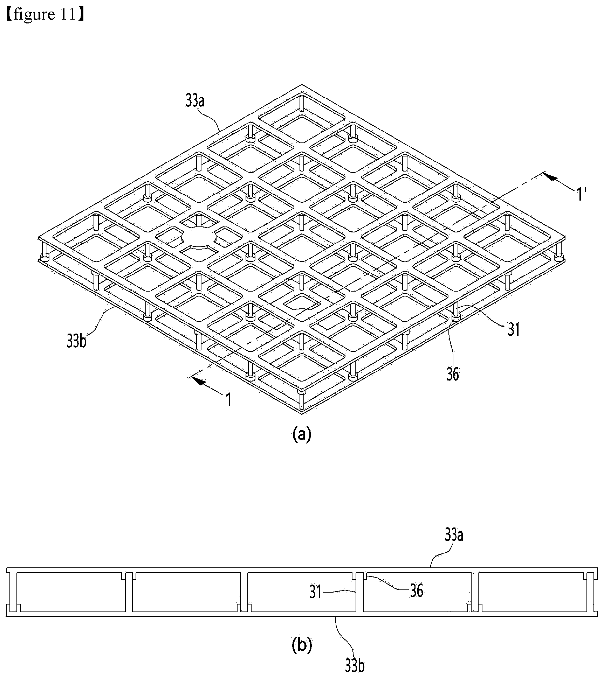

FIG. 11 is a view of the support according to an embodiment. FIG. 11(a) illustrates the support to which the units are symmetrically aligned. FIG. 11(b) is a cross-sectional view taken along line 1-1' of FIG. 11(a). Descriptions will be made with reference to FIG. 11.

The upper unit 33a and the lower unit 33b may be the same as each other. The unit may be provided with the first and fourth supporting bodies alternately. A first Y-axis edge of the unit may be provided as an end portion of each of first supporting body 31...the fourth supporting body 39. Here, the meaning of '...' may be said that the first to fourth supporting bodies are alternately disposed. A second Y-axis edge of the unit may be provided as an end portion of each of the fourth supporting body ...the first supporting body. The first Y-axis edge and the second Y-axis edge may refer to a pair of Y-axis edges facing each other in the unit. The first X-axis edge of the unit may be provided as an end portion of each of the first supporting body 31...the fourth supporting body 39. The second X-axis edge of the unit may be provided as an end portion of each of the fourth supporting body...an the first supporting body. The first X-axis edge and the second X-axis edge may refer to a pair of X-axis edges facing each other in the unit. A unit in which the first and second supporting bodies are arranged in a crossing relationship may be called a two-axis male-female asymmetrical unit.

The support may be provided with second and third supporting bodies 36 and 38. The second and third supporting bodies may be directly connected to provide a larger support.

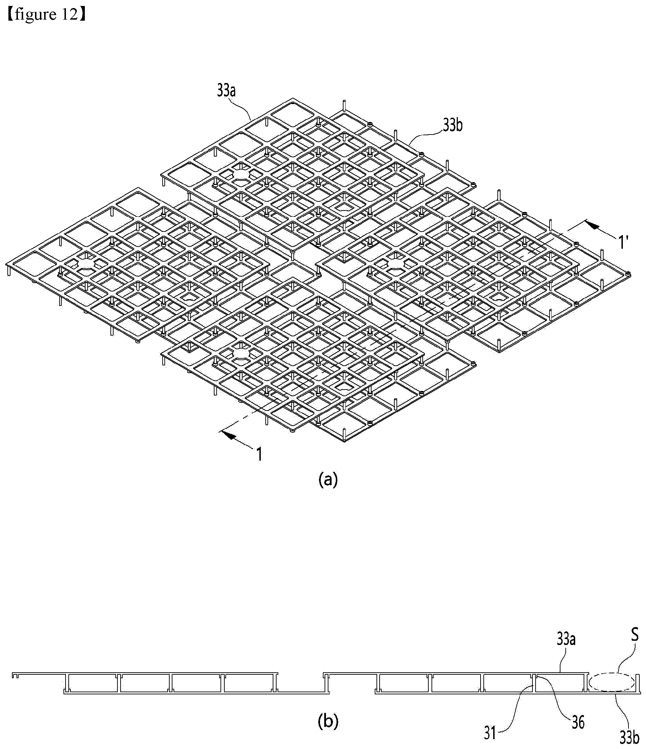

FIG. 12 is a view of the support according to an embodiment. FIG. 11(a) illustrates the support to which the units are asymmetrically aligned. FIG. 12(b) is a cross-sectional view taken along line 1-1' of FIG. 12(a). Descriptions will be made with reference to FIG. 12.

The two-axis male-female asymmetrical units may be coupled vertically without being aligned. It may be coupled by moving by one pitch in two axes in the extension direction of the vacuum space. The support may not be provided with the second and third supporting bodies 36 and 38. The upper and lower units may be coupled by crossing each other. The support may infinitely increase in size. An empty area S in which one grid of the unit at either side is empty may be provided. The empty area S may be an area without the support plate or support at either side. Components that are necessary for the operation of the vacuum adiabatic body such as a tube and a getter may be placed in the empty area S. In the above empty area S, an area defined at the edge of the support may be supported by a single bar or a single support plate. In the above empty area S, an areas defined at the edge of the support may be removed later.

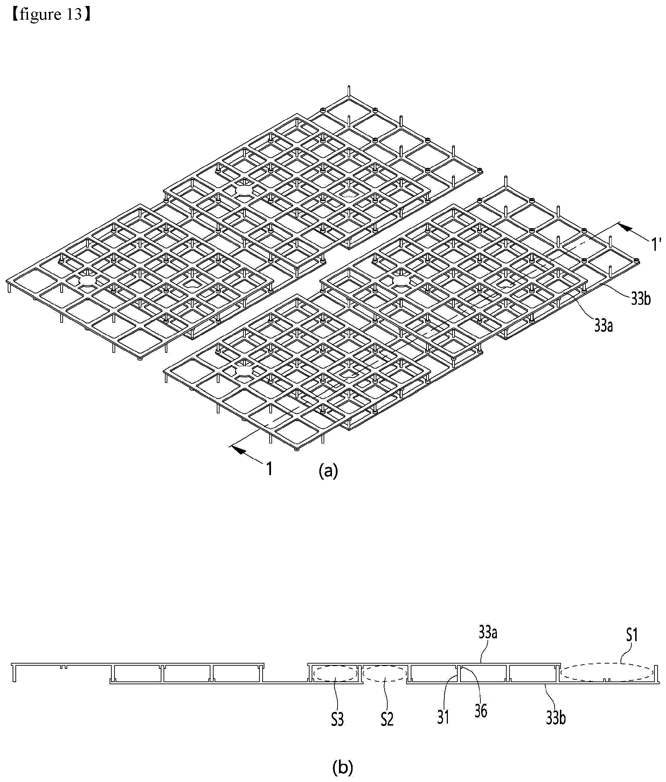

FIG. 13 is a view of the support according to an embodiment. FIG. 13(a) illustrates the support to which the units are asymmetrically aligned. FIG. 13(b) is a cross-sectional view taken along line 1-1' of FIG. 13(a). Descriptions will be made with reference to FIG. 13.

The two-axis male-female asymmetrical units may be coupled vertically without being aligned. It may be coupled by moving by two pitches in one axis in the extension direction of the vacuum space. The support may be provided only on a pair of edges facing the second and third supporting bodies 36 and 38. The upper and lower units may be coupled by crossing each other. The support may infinitely increase in size. A large empty area S1 in which the two grids are empty may be provided at either side of the unit cell. Large components that are necessary for the operation of the vacuum adiabatic body such as the heat exchanger may be placed in the large empty area S1. When compared to the large empty area S1, the empty area of one grid may be said to be a small empty area S2. Small parts that are necessary for the operation of the vacuum adiabatic body such as the tube or the getter may be placed in the small empty area S2.

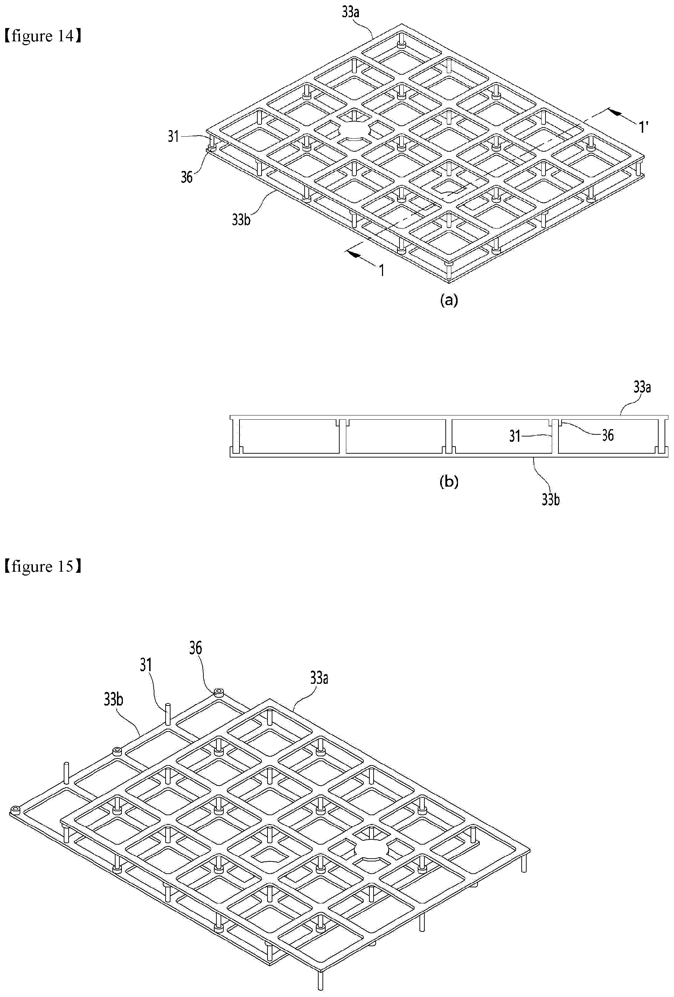

FIG. 14 is a view of the support according to an embodiment. FIG. 14(a) illustrates the support to which the units are symmetrically aligned. FIG. 14(b) is a cross-sectional view taken along line 1-1' of FIG. 14(a). Descriptions will be made with reference to FIG. 14.

The upper unit 33a and the lower unit 33b may be the same as each other. The unit may be provided with the first and fourth supporting bodies alternately. The first Y-axis edge of the unit may be provided as an end portion of each of fourth supporting body 39...the fourth supporting body 39. Here, the meaning of '...' may be said that the first to fourth supporting bodies are alternately disposed. A second Y-axis edge of the unit may be provided as an end portion of each of the first supporting body ...the first supporting body. The first Y-axis edge and the second Y-axis edge may refer to a pair of Y-axis edges facing each other in the unit. The first X-axis edge of the unit may be provided as an end portion of each of the fourth supporting body 39...the fourth supporting body 31. The second X-axis edge of the unit may be provided as an end portion of each of the fourth supporting body...an the fourth supporting body. The first X-axis edge and the second X-axis edge may refer to a pair of X-axis edges facing each other in the unit. A unit in which the first and second supporting bodies are arranged in a crossing relationship may be called one-axis male-female symmetrical unit.

The one-axis male-female symmetrical unit may be manufactured in various cases by changing the grid number of X-axis and the grid number of Y-axis. The one-axis male-female symmetrical unit may provide various mutually isomeric units by rotating at 90 degrees.

The support may be provided with second and third supporting bodies 36 and 38. The second and third supporting bodies may be connected to provide a larger support.

FIG. 15 is a view of the support according to an embodiment. FIG. 15 illustrates the support to which the units are asymmetrically aligned. Descriptions will be made with reference to FIG. 15.

The one-axis male-female symmetrical units may be coupled vertically without being aligned. It may be coupled by moving by one pitch in one axis in the extension direction of the vacuum space. The upper unit 33a may rotate at a right angle. The support may be provided with second and third supporting bodies 36 and 38. The upper and lower units may be coupled by crossing each other. The support may infinitely increase in size.

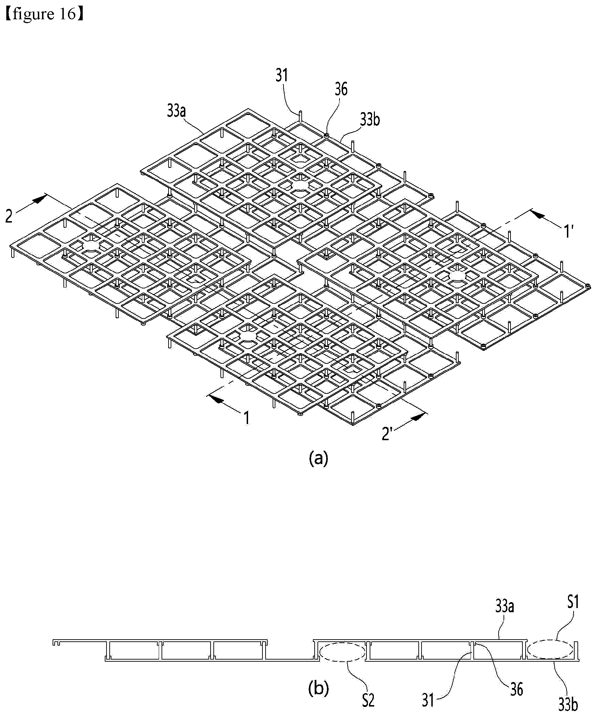

FIG. 16 is a view of the support according to an embodiment. FIG. 16(a) is a view of a support that moves by one pitch in the two axes in the extension direction of the vacuum space and then is coupled. FIG. 16(b) is a cross-sectional view taken along line 1-1' of FIG. 16(a). Descriptions will be made with reference to FIG. 16.

The one-axis male-female symmetrical unit may provide various combinations of the supports. The one-axis male-female asymmetrical units may be coupled vertically without being aligned. It may be coupled by moving by one pitch in two axes in the extension direction of the vacuum space. The support may not be provided with the second and third supporting bodies 36 and 38. The upper and lower units may be coupled by crossing each other. The support may infinitely increase in size. A small empty area S1 may be provided in one grid of the unit cell at either side.

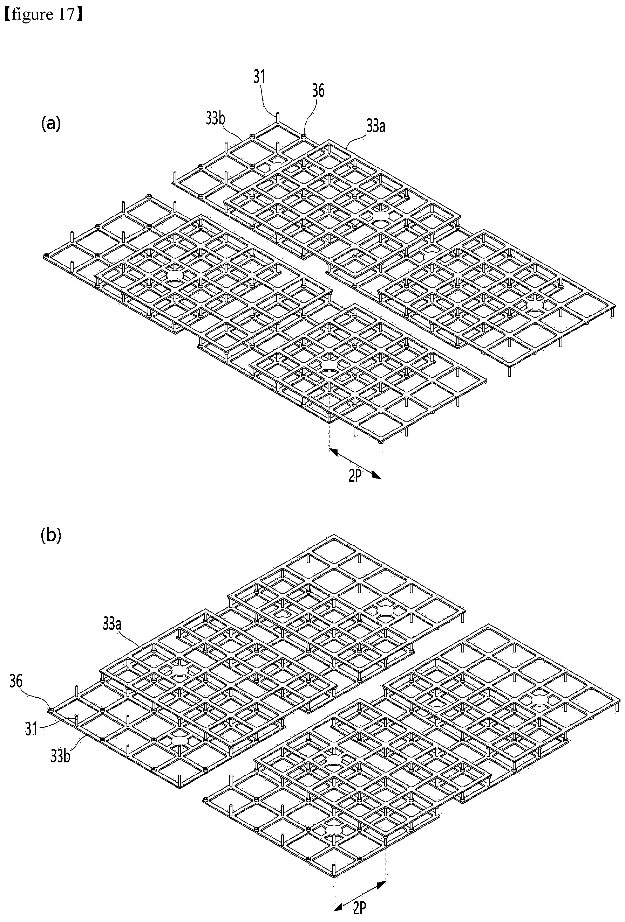

FIG. 17 is a view of the support according to an embodiment. FIG. 17(a)(b) are views of a support that moves by two pitches along the one axis in the extension direction of the vacuum space and then is coupled. FIG. 17(c)(d) are views of a support that moves by one pitch along the one axis in the extension direction of the vacuum space and then is coupled . Descriptions will be made with reference to FIG. 17.

The one-axis male-female symmetrical unit may provide various combinations of the supports. The one-axis male-female asymmetrical units may be coupled vertically without being aligned. It may be coupled by moving by one pitch in one axis in the extension direction of the vacuum space. The support may be provided on a pair of opposing edges of the second and third supporting bodies 36 and 38. The upper and lower units may be coupled by crossing each other. The support may infinitely increase in size. A small empty area S1 may be provided in one grid of the unit cell at either side. The one-pitch movement and the two-pitch movement may have different rotational states of the upper and lower units.

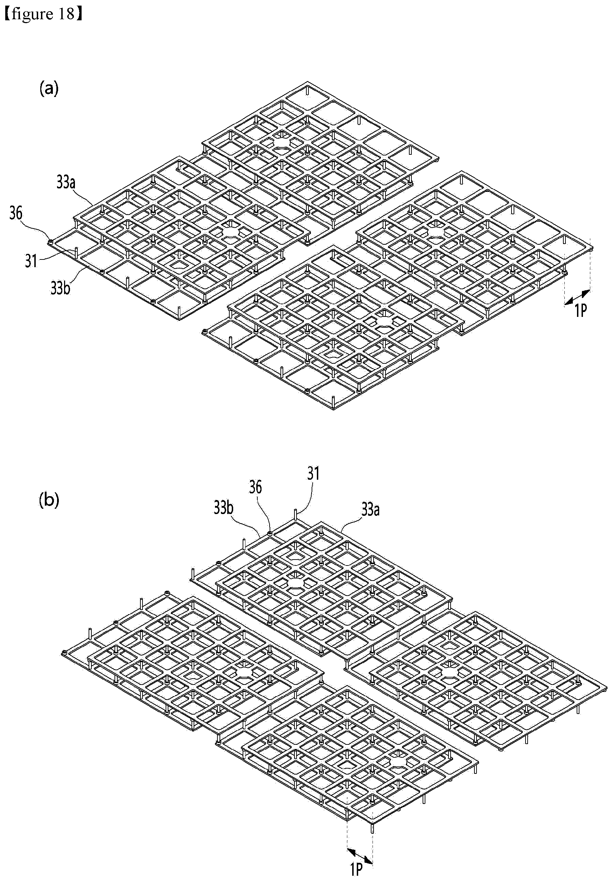

FIG. 18 is a view of the support according to an embodiment. FIG. 18(a) illustrates a support in which the upper and lower units are not aligned in the X-axis direction of the vacuum space. FIG. 18(b) illustrates a support in which the upper and lower units are not aligned in the Y-axis direction of the vacuum space. Descriptions will be made with reference to FIG. 18.

The upper unit 33a and the lower unit 33b may be the same as each other. The unit may be provided with the first and fourth supporting bodies alternately. The first Y-axis edge of the unit may be provided as an end portion of each of fourth supporting body 39...the fourth supporting body 39. Here, the meaning of '...' may be said that the first to fourth supporting bodies are alternately disposed. A second Y-axis edge of the unit may be provided as an end portion of each of the first supporting body ...the first supporting body. The first Y-axis edge and the second Y-axis edge may refer to a pair of Y-axis edges facing each other in the unit. The first X-axis edge of the unit may be provided as an end portion of each of the fourth supporting body 31...the fourth supporting body 39. The second X-axis edge of the unit may be provided as an end portion of the first supporting body...the first supporting body. The first X-axis edge and the second X-axis edge may refer to a pair of X-axis edges facing each other in the unit. A unit in which the first and second supporting bodies are arranged in a crossing relationship may be called a two-axis male-female symmetrical unit.

The support may be provided with second and third supporting bodies 36 and 38. The second and third supporting bodies may be connected to provide a larger support.

The two-axis male-female symmetrical units may be connected vertically without being aligned. The two-axis male-female symmetrical units may not be symmetrically aligned. It may be coupled by moving by one pitch in any one axis in the extension direction of the vacuum space. The upper and lower units may be coupled by crossing each other. The support may infinitely increase in size. An empty area S in which one grid of the unit at either side is empty may be provided. Components that are necessary for the operation of the vacuum adiabatic body such as a tube and a getter may be placed in the empty area S1.

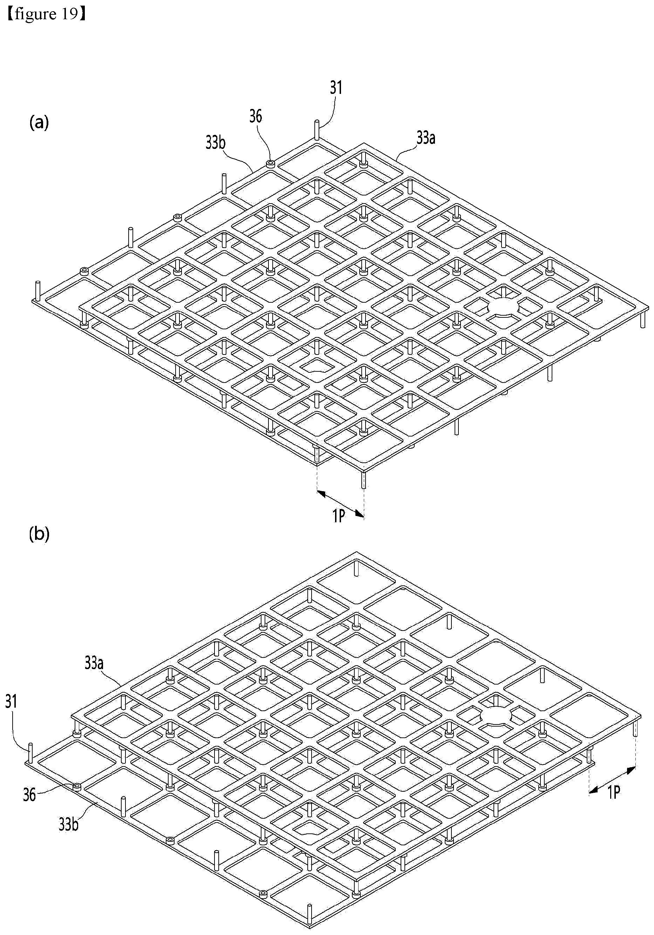

FIG. 19 is a view of the support according to an embodiment. FIG. 19(a) illustrates a support in which the upper and lower units are not aligned in the X-axis direction of the vacuum space. FIG. 19(b) is a cross-sectional view taken along line 1-1' of FIG. 19(a). FIG. 19(c) is a plan view of FIG. 19(a). Descriptions will be made with reference to FIG. 19.

One of the upper and lower units 33a and 33b may move by three pitches in the first axis (e.g., X-axis) in the extension direction of the vacuum space relative to the other and then be coupled One of the upper and lower units 33a and 33b may move by three pitches in the second axis (e.g., Y-axis) in the extension direction of the vacuum space relative to the other and then be coupled. Adjacent upper units may be placed to be spaced two pitches from each other. Adjacent upper units may be placed to be spaced two pitches from each other. The upper and lower units may be coupled to cross each other. The support may infinitely increase in size. It is possible to provide both the large empty area S1, in which two grids of one unit are empty, and the small empty area S2, in which two grids of one unit are empty.

Embodiments of the unit may provide support by moving along at least one axis of the extension direction of the vacuum space by a grid number of 2n (n is a natural number). This is done because the first and fourth supporting bodies are alternately disposed.

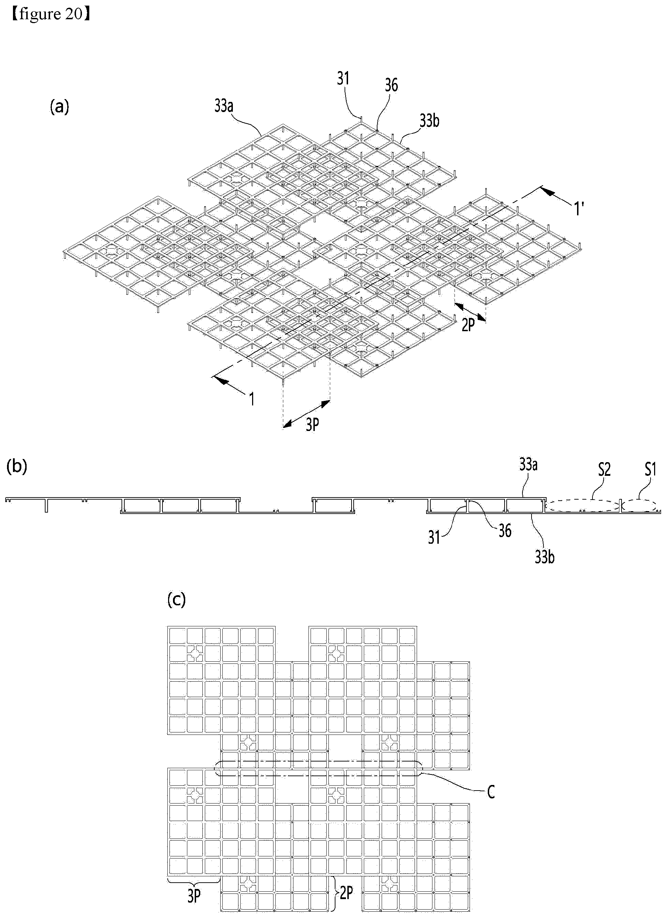

FIG. 20 is a view illustrating a coupling relationship along the extension direction of the vacuum space of the unit. FIG. 20(a) is a partial cross-sectional view of the unit according to an embodiment. FIG. 20(b) is a partial cross-sectional view of the support according to an embodiment. Descriptions will be made with reference to FIG. 20.

The following contents may be provided optionally. The first and second supporting bodies 31and 39 may be provided alternately. The upper unit 33a and the lower unit 33b may be coupled to each other in a thickness direction of the vacuum space. The upper unit 33a and the lower unit 33b may be coupled alternately to each other. Thus, the support may be provided as a single structure. At least two lower units may be coupled to each other by second and third supporting bodies 36 and 38. At least two upper units may be the same.

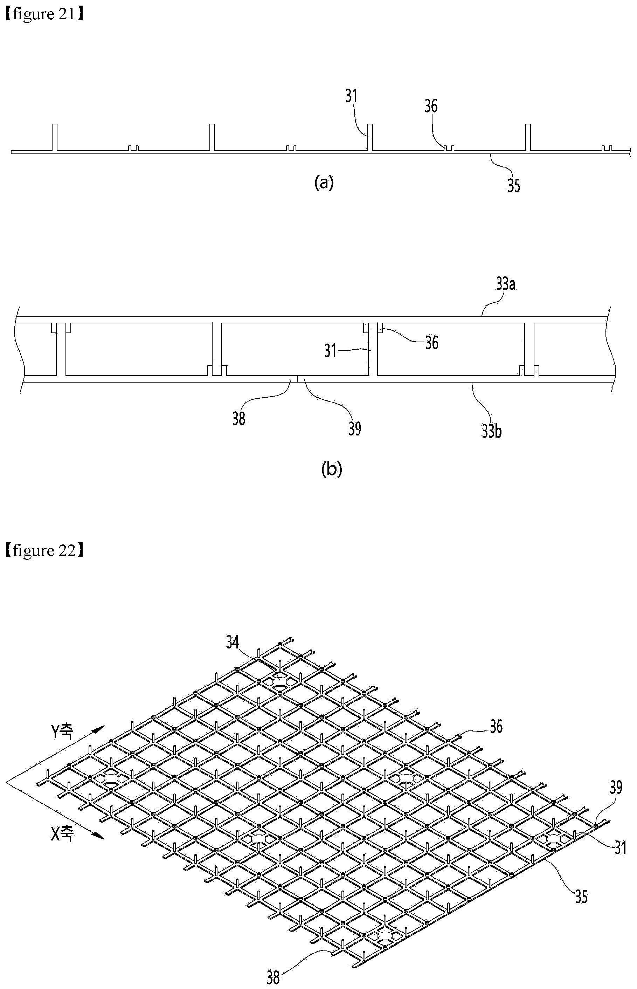

FIG. 21 is a view of the support according to an embodiment. FIG. 21(a) is a view of the unit according to an embodiment. FIG. 21(b) is a view illustrating a symmetrical alignment according to an embodiment. Descriptions will be made with reference to FIG. 21.

In the unit, the first supporting body 31 may be gathered on the first area 311. The following contents may be applied optionally. In the unit, the fourth supporting body 39 may be gathered on the second area. In at least one of the first or second area, respective supports may be evenly disposed. The unit may have at least one of the first and second supporting bodies that are disposed unevenly. A first density of an injection gate may be high in an area on which there are many first supporting bodies. The density of the injection gate on the area in which a large amount of fourth supporting body is provided may be lower than the first density. The injection gates may be evenly placed on each area. A boundary area 312 may be provided between the areas. The boundary area may extend in one direction. There may be at least two boundary areas. The boundary areas may intersect each other. A pair of facing edges of the unit may be provided with second and third supporting bodies 36 and 38. The unit may be called a two-axis male-female group alternating unit.

The two-axis male-female group alternating unit may be coupled as an upper unit 33a and a lower unit 33b. The upper unit 33a and the lower unit 33b may be of the same type. Each unit may be coupled at an appropriate rotation angle. The support may be symmetrically aligned in any one axis direction along the extension direction of the vacuum space. The support may be infinitely expanded by the unit.

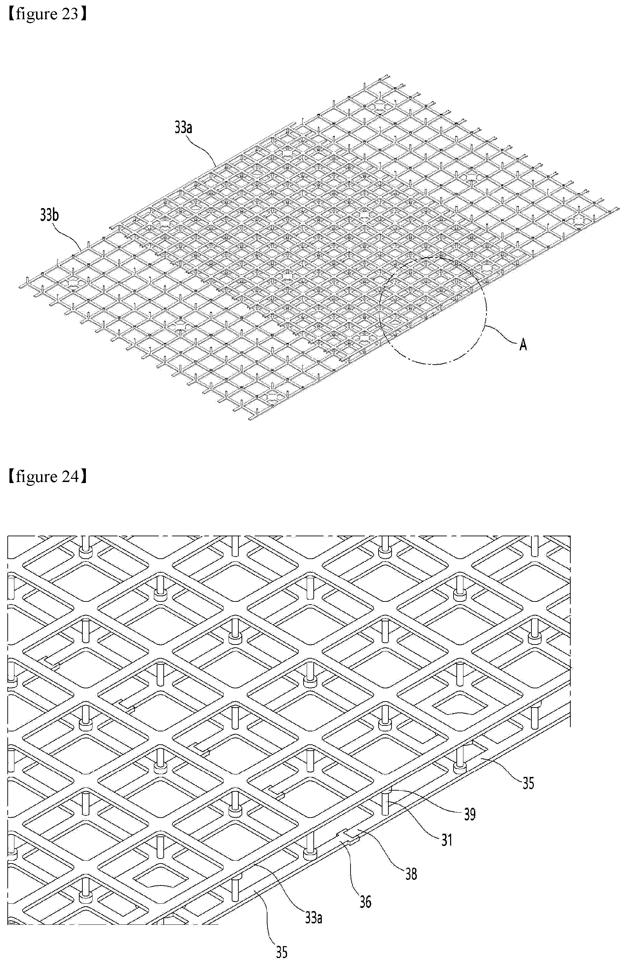

FIG. 22 is a view illustrating the unit of the support according to an embodiment. FIG. 23 is a view of the support according to an embodiment. FIG. 24 is an enlarged view of a portion A of FIG. 23. The descriptions will be made with reference to FIGS. 22 to 24.

The upper unit 33a and the lower unit 33b may be the same as each other. The unit may be provided with the first and fourth supporting bodies that are alternately arranged along either axis. The unit may be provided with the first and fourth supporting bodies that are continuous along either axis. The following contents may be optional. The first Y-axis edge of the unit may be provided as an end portion of each of the fourth supporting body 39...the first supporting body 31. Here, the meaning of '...' may be said that the first to fourth supporting bodies are alternately disposed. A second Y-axis edge of the unit may be provided as an end portion of each of the first supporting body ...the fourth supporting body. The first Y-axis edge and the second Y-axis edge may refer to a pair of Y-axis edges facing each other in the unit. The fourth supporting body 39 may be provided at both ends of the first X-axis edge of the unit. The fourth supporting body 39 may be continuous on the first X-axis edge. The first supporting body may be provided at each of both ends of the second X-axis edge of the unit. The first supporting body 31 may be continuous at the first X-axis edge. The first X-axis edge and the second X-axis edge may refer to a pair of X-axis edges facing each other in the unit. A unit in which the first and second supporting bodies are arranged in a crossing relationship may be called one-axis male-female alternating one-axis symmetrical unit.

The support may be provided with second and third supporting bodies 36 and 38. The second and third supporting bodies may be directly connected to provide a larger support.

The one-axis male-female alternating one-axis symmetrical units may be coupled vertically without being aligned. It may move by one pitch in one axis in the extension direction of the vacuum space and then be coupled. The upper and lower units may be coupled to cross each other. The support may infinitely increase in size.

The one-axis male-female alternating one-axis symmetrical unit may change the axis along which the male and female units are alternately disposed. This may be equivalent to rotating the unit at 90 degrees or 270 degrees.

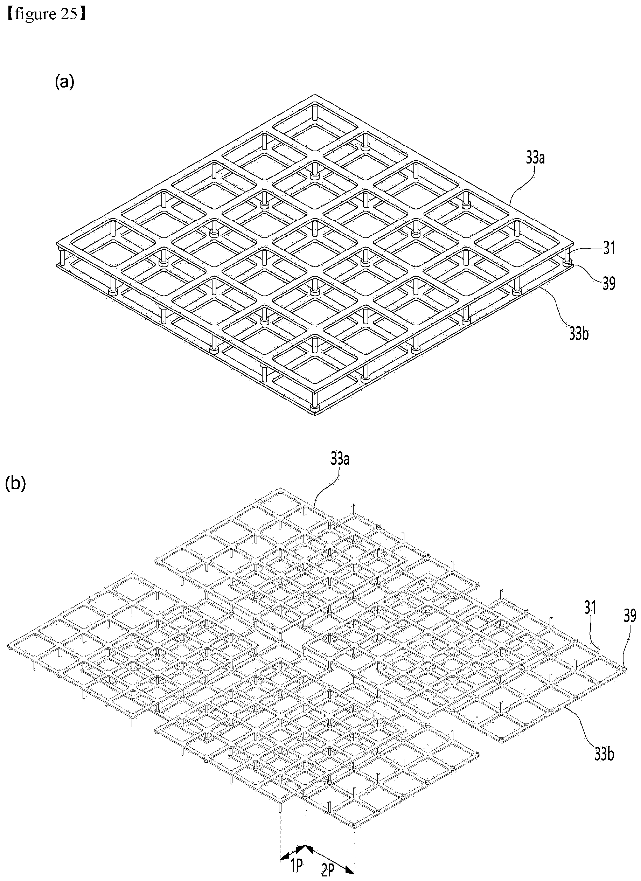

FIG. 25 is a view for explaining the one-axis male-female alternating one-axis symmetrical unit. FIG. 25(a) is a view of a symmetric alignment. FIG. 25(b) is a view illustrating a symmetrical alignment. Descriptions will be made with reference to FIG. 25.

The one-axis male-female alternating one-axis symmetrical unit may be symmetrically aligned. In this case, the second and third supporting bodies 36 and 38 may be provided. The support may be extended infinitely. The one-axis male-female alternating one-axis symmetrical units may be misaligned. In this case, one of the upper unit 33a and the lower unit 33b may be coupled by moving 2n (n is a natural number) pitches along one axis relative to the other. Here, one axis may be a axis along which the first and second supporting bodies are alternately disposed, or in other words, a axis along which the male-female supports are alternately disposed. In this case, one of the upper unit 33a and the lower unit 33b may move by 2n (n is a natural number) pitches along the other axis relative to the other and then be coupled. Here, the other axis may be an axis along which the first and second supporting bodies are continuous. It is possible to provide both a large empty area in which two or more grids of either unit are empty, and a small empty area in which less than two grids of either unit are empty.

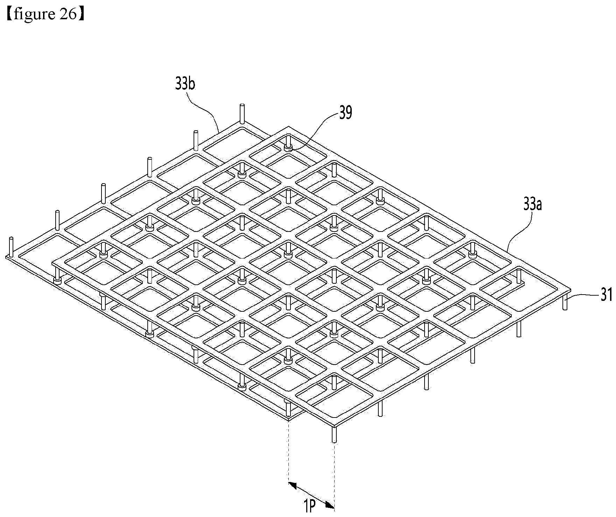

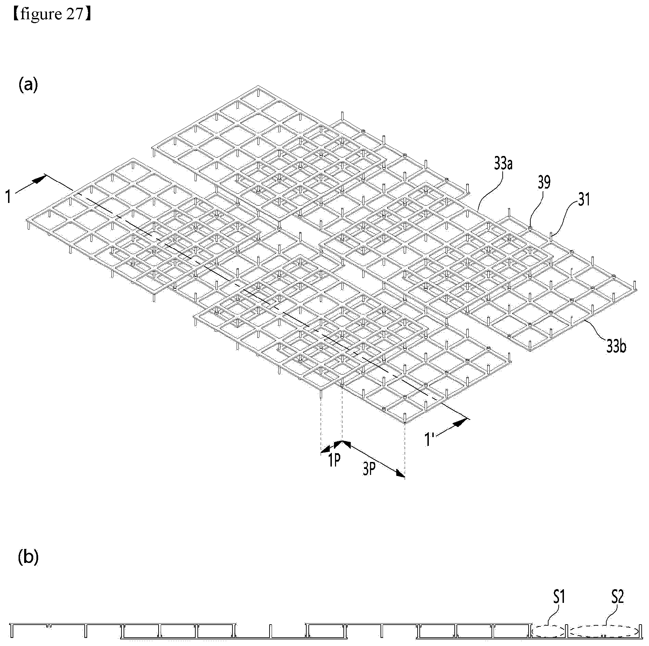

FIG. 26 is a view illustrating a coupling structure of the unit according to an embodiment. FIG. 27(a) is a view of the other support according to an embodiment. FIG. 27(b) is a cross-sectional view taken along line 1-1' of FIG. 27(a). This will be described with reference to FIGS. 26 and 27.

The upper unit 33a and the lower unit 33b may be the same as each other. The unit may be provided with the first and fourth supporting bodies that are alternately arranged along either axis. The unit may be provided with the first and fourth supporting bodies that are continuous along either axis. The following contents may be optional. The first Y-axis edge of the unit may be provided as an end portion of each of fourth supporting body 39...the fourth supporting body 39. Here, the meaning of '...' may be said that the first to fourth supporting bodies are alternately disposed. A second Y-axis edge of the unit may be provided as an end portion of each of the fourth supporting body ...the fourth supporting body. The first Y-axis edge and the second Y-axis edge may refer to a pair of Y-axis edges facing each other in the unit. The first supporting body 31 may be provided at both ends of the first X-axis edge of the unit. The first supporting body 31 may be continuous on the first X-axis edge. The first supporting body may be provided at each of both ends of the second X-axis edge of the unit. The first supporting body 31 may be continuous at the first X-axis edge. The first X-axis edge and the second X-axis edge may refer to a pair of X-axis edges facing each other in the unit. A unit in which the first and second supporting bodies are arranged in a crossing relationship may be called one-axis male-female alternating two-axis symmetrical unit. Unlike the one-axis male-female alternating one-axis symmetrical unit, the one-axis male-female alternating two-axis symmetrical unit may be symmetrical along both the X-axis and the Y-axis.

The support may be provided with second and third supporting bodies 36 and 38. The second and third supporting bodies may be directly connected to provide a larger support.

The one-axis male-female alternating two-axis symmetrical unit may be difficult to be aligned symmetrically. The one-axis male-female alternating two-axis symmetrical unit may be misaligned. In this case, one of the upper unit 33a and the lower unit 33b may be coupled by moving (1+2n) (n is 0 or a natural number) pitches along one axis relative to the other. Here, one axis may be a axis along which the first and second supporting bodies are alternately disposed, or in other words, a axis along which the male-female supports are alternately disposed. In this case, one of the upper unit 33a and the lower unit 33b may be coupled to move by 2n (n is a natural number) pitches along the other axis relative to the other. Here, the other axis may be an axis along which the first and second supporting bodies are continuous. The upper and lower units may be coupled to cross each other. The support may infinitely increase in size. It is possible to provide both a large empty area in which two or more grids of either unit are empty, and a small empty area in which less than two grids of either unit are empty.

The one-axis male-female alternating two-axis symmetrical unit may change the axis along which the male and female units are alternately disposed. This may be equivalent to rotating the unit at 90 degrees or 270 degrees.

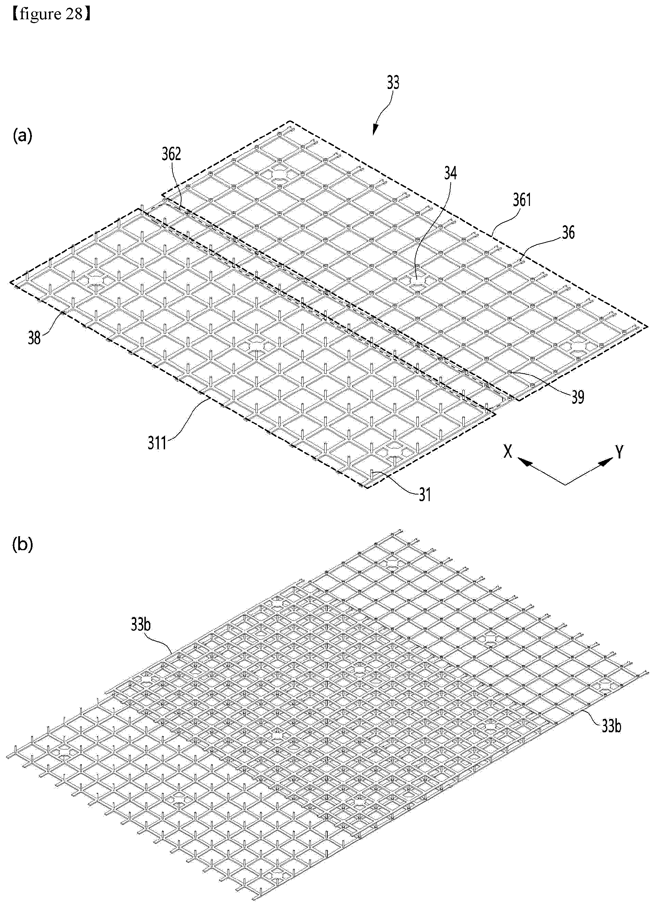

FIG. 28 is a view of the unit and the support according to an embodiment. FIG. 28(a) is a view of the one-axis male-female group alternating unit. FIG. 28 is a view of the support of the one-axis male-female group alternating unit. Descriptions will be made with reference to FIG. 28.

In the unit, the first supporting body 31 may be gathered on the first area 311. The following contents may be applied optionally. In the unit, a fourth supporting body 39 may be gathered on the second area 361. In at least one of the first or second area, respective supports may be evenly disposed. The injection gates may be evenly placed on each area. A boundary area 362 may be provided between the areas. The boundary area may extend in one direction. There may be one boundary area. At least one pair of facing edges of the unit may be provided with second and third supporting bodies 36 and 38. The unit may be called a one-axis male-female group alternating unit.

The one-axis male-female group alternating unit may be coupled as an upper unit 33a and a lower unit 33b. The upper unit 33a and the lower unit 33b may be of the same type. The units may be symmetrically aligned. The units may be misaligned. The support may be infinitely expanded by the unit.

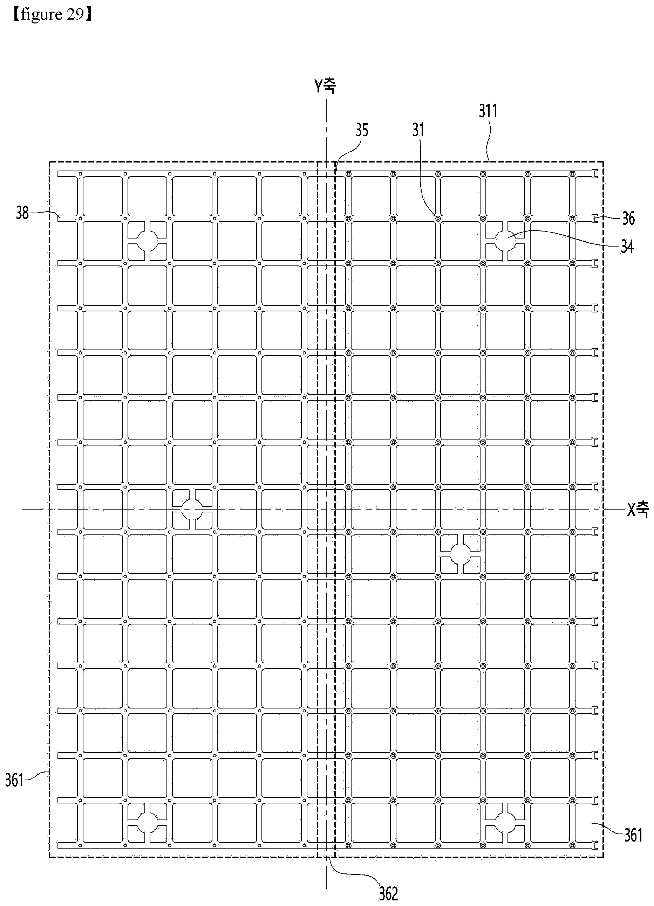

FIG. 29 is a plan view of the one-axis male-female group alternating unit. Descriptions will be made with reference to FIG. 29.

The one-axis male-female group alternating unit may have an injection gate 34 that is not uniform in the X-axis direction. A first density of an injection gate may be high in an area on which there are many first supporting bodies. The density of the injection gate on the area in which a large amount of fourth supporting body is provided may be lower than the first density. The one-axis male-female group alternating unit may have an injection gate that is not uniform in the Y-axis direction. The second and third supporting bodies 36 and 38 may be provided on a pair of facing edges.

### INDUSTRIAL APPLICABILITY

According to the present invention, the vacuum adiabatic body may be provided at low costs.

## Claims

1. A vacuum adiabatic body comprising:
a first plate having a first temperature;
a second plate having a second temperature different from the first temperature;
a vacuum space provided between the first plate and the second plate; and
a support configured to support the vacuum space and provided in or near the vacuum space,
wherein the vacuum space extends in an X-axis or Y-axis direction that is a longitudinal direction of the vacuum space and is provided to have a height in a Z-axis direction that is a height direction of the vacuum space,
wherein the support comprises:
a first unit; and
a second unit disposed near the first unit in the longitudinal direction of the vacuum space, wherein the support comprises a second supporting body provided on the periphery of the first unit and a third supporting body provided on the periphery of the second unit and coupled to or supported by the second supporting body,
wherein the support comprises a first support, and a second support comprising a portion that is provided to be spaced apart from the first support in the height direction of the vacuum space, and
wherein the first unit of the first support is provided with a first supporting body coupled to or
supported by at least one of the first unit or the second unit of the second support, and a fourth supporting body having a shape that is coupled to or supported by the first supporting body,
wherein the first unit of the first support is provided as a single type of unit or a unit having the same shape as at least one of the first or second unit of the second support.

2. The vacuum adiabatic body according to claim 1,
wherein the first and fourth supporting bodies of the support are provided to be spaced a first interval (pitch) from each other in the longitudinal direction of the vacuum space, and
the first unit of the first support moves by n pitches (n is a natural number greater than 0) in the longitudinal direction of the vacuum space relative to the first unit of the second support and is coupled or supported.

3. The vacuum adiabatic body according to claim 2, wherein components are disposed in an empty area (S) defined by allowing the first unit of the first support to be coupled or supported by moving by the n pitches (n is a natural number greater than 0) in the longitudinal direction of the vacuum space relative to the first unit of the second support.

4. The vacuum adiabatic body according to claim 1, wherein the support comprises:
a first supporting body that is provided in plurality; and
a first area, on which the plurality of first supporting bodies are provided at a plurality of points spaced a first interval from each other, respectively, and a second area that is an empty area (S) on which the first supporting body is not provided on at least a portion of the plurality of points.

5. The vacuum adiabatic body according to claim 4, wherein components are disposed on the second area.

6. The vacuum adiabatic body according to claim 1, wherein the first unit of the first support is provided with at least two supporting bodies and has a first area in which a density of the first supporting body of the at least two units is high, and a second area in which a density of the second supporting body of the at least two units is high.

7. The vacuum adiabatic body according to claim 6, wherein a boundary area defined between the first area and the second area is defined, and components are disposed on the boundary area.

8. The vacuum adiabatic body according to claim 1, wherein, in the first unit of the support, the first supporting body and the fourth supporting body are disposed alternately in one direction of the X-axis and Y-axis directions so that each of the first and fourth supporting bodies comprises a portion that is continuously disposed without being disposed alternately in the other direction of the X-axis and the Y-axis directions.

9. The vacuum adiabatic body according to claim 8, wherein the first unit of the first support is coupled or supported by moving by (1+2n) pitches (n is 0 or a natural number) or 2n pitches (n is a natural number greater than 0) along the first axis to a first axis, along which the first supporting body and the fourth supporting body are alternately disposed, relative to the first unit of the second support.

10. The vacuum adiabatic body according to claim 8, wherein the first unit of the first support is coupled or supported by moving by n pitches (n is a natural number greater than 0) along the second axis, along which each of the first and fourth supporting bodies is continuously disposed without alternation, relative to the first unit of the second support.

11. The vacuum adiabatic body according to claim 1, wherein, in the first unit of the support, the first supporting body and the fourth supporting body are alternately disposed in the X-axis and Y-axis directions.

12. The vacuum adiabatic body according to claim 11, wherein the first unit of the first support is coupled or supported by moving by (1+2n) pitches (n is 0 or a natural number) or 2n pitches (n is a natural number greater than 0) along the first axis to a first axis, along which the first supporting body and the fourth supporting body are alternately disposed, relative to the first unit of the second support.

13. The vacuum adiabatic body according to claim 11, wherein the first unit of the first support is coupled or supported by moving by n pitches (n is a natural number greater than 0) along the second axis, along which each of the first and fourth supporting bodies is continuously disposed without alternation, relative to the first unit of the second support.
